# EUROPEAN PATENT APPLICATION

(11) **EP 4 799 514 A1**
(43) Date of publication of application: **02.09.2026**
(21) Application number: 26161144.6
(22) Date of filing: 26.02.2026
(51) Int. Cl.: A43B 1/028, A43B 23/02, A43B 23/04, B33Y 80/00

(54) **METHOD AND SYSTEM FOR MANUFACTURING A TEXTILE ELEMENT**

(30) Priority: 28.02.2025 CH 1872025; 28.02.2025 CH 1862025; 28.02.2025 CH 1922025; 31.07.2025 EP 25193003
(71) Applicant: On Clouds GmbH, 8005 Zürich (CH)
(72) Inventor: AKERMANN, Michael, 8005 Zürich (CH)
(74) Representative: Eichelhardt, Frank Robert

(57) **Abstract**

The invention relates to a method for manufacturing a textile element (10, 110, 210, 310, 410), the method comprising an application step of applying, in particular spraying, a thermoplastic filament (18) onto a shaping carrier (20, 120), in particular a footwear last (22, 122), to form a plurality of path segments (24), in particular loops (26), on the shaping carrier (20, 120) along an application path (28, 128), thereby at least partially forming the textile element (10, 110, 210, 310, 410). During the application step the thermoplastic filament (18) is discharged from a textile output unit (64) and directed toward the shaping carrier (20, 120). The method may further comprise a detection step of detecting the thermoplastic filament (18), in particular at least one filament parameter of the thermoplastic filament (18), between the textile output unit (64) and the shaping carrier (20, 120).

## Description

### Technical Field

The present invention relates to a method for manufacturing textile elements, in particular textile footwear uppers, to textile elements, in particular textile footwear uppers, manufactured by such a method, and to articles of footwear, in particular sports and/or leisure shoes, having such textile elements forming textile footwear uppers. Furthermore, the present invention pertains to a manufacturing system being configured to execute such a method.

### Background

Apparel manufacturing, including footwear, has continuously evolved to meet the demands of performance, comfort, and sustainability. The need for high-quality garments and shoes that offer durability, flexibility, breathability, and lightweight construction has driven innovation in production techniques. Traditional methods of manufacturing apparel and footwear involve knitting, weaving, or using cut-and-sew techniques, which can result in material waste and require extensive labor. Recent innovations have sought to improve efficiency, reduce waste, and enhance the performance characteristics of these products.

Emerging techniques enable the direct application of material onto a substrate, allowing for controlled deposition of functional layers. This approach facilitates the creation of lightweight, seamless, and high-performance apparel and footwear components with improved breathability and durability while minimizing material waste.

WO 2022/069583 A1 discloses a method for producing a textile material, in particular a shoe upper, by applying a molten thermoplastic filament onto a shoe last to form the textile material with a plurality of superimposed loops. Herein, the thermoplastic filament is ejected from a spray head in a molten state as a helical strand and applied to the shoe last.

Existing methods for constructing apparel and footwear often involve multiple steps and separate material components, which can lead to inefficiencies in production and variability in product performance. Advanced material application techniques address these challenges by streamlining the manufacturing process and offering greater design flexibility.

Despite these advancements, there remains a need for further refinement and optimization of these techniques. This involves improving the performance of the products while also increasing flexibility in production processes and product properties, allowing for more precise control over characteristics such as durability and usability.

This includes the ability to customize material composition, texture, breathability, elasticity, and structural support while also ensuring scalable and cost-effective production methods that meet the evolving demands of the industry, all while minimizing environmental impact and promoting sustainable practices throughout the production cycle.

### Summary

The invention relates to a method for manufacturing a textile element, in particular a textile footwear upper, the method comprising an application step of applying, in particular spraying, a thermoplastic filament onto a shaping carrier, in particular a footwear last, to form a plurality of path segments, in particular loops, on the shaping carrier along an application path, thereby at least partially forming the textile element. During the application step the thermoplastic filament is discharged from a textile output unit and directed toward the shaping carrier.

In one aspect of the invention, which may be considered independently or in combination with other aspects disclosed herein, the method may further comprise a detection step of detecting the thermoplastic filament, in particular at least one filament parameter of the thermoplastic filament, between the textile output unit and the shaping carrier.

In another aspect of the invention, which may be considered independently or in combination with other aspects disclosed herein, the method may further comprise a modification step of modifying at least one application parameter related to the applying, in particular the spraying, of the thermoplastic filament onto the shaping carrier. The modification step may be performed during the application step.

In yet another aspect of the invention, which may be considered independently or in combination with other aspects disclosed herein, the method may further comprise a modification step of modifying at least one color of the thermoplastic filament. The modification step may be performed during the application step. Thus, the modification step may comprise modifying at least one application parameter related to the applying, in particular the spraying, of the thermoplastic filament onto the shaping carrier, wherein the at least one application parameter may comprise at least one thermoplastic material parameter of the thermoplastic filament, wherein the thermoplastic material parameter may comprise at least one color of the thermoplastic filament.

Furthermore, the invention relates to a textile element, in particular a textile footwear upper, manufactured by the aforementioned method.

The invention also concerns an article of footwear, in particular a sports and/or leisure shoe, comprising: the aforementioned textile element forming a textile footwear upper; and a sole unit which is connected to the textile footwear upper.

In addition, the invention pertains to a manufacturing system for manufacturing a textile element, in particular a textile footwear upper, the manufacturing system being configured to execute the aforementioned method.

Through this, a method and system for manufacturing a textile element, in particular a textile footwear upper, and for manufacturing an article of footwear can be refined and/or optimized. The performance of the final products can be improved while increasing flexibility during production and with respect to product properties. Precise control over product characteristics such as flexibility, cushioning, durability, and/or usability can be achieved. A wide range of customizations can be made possible, in particular regarding material density, texture, elasticity, breathability, and structural support. Yet still, scalable, cost-effective, streamlined, and/or fully automated production methods can be enabled.

The textile element may be envisaged for use in an apparel, may be part of an apparel, and/or may constitute the apparel. In this context an "apparel" may be understood as a personal item that may be worn and/or carried by and/or on a person, like, for example, a cap, a hat, a helmet, a harness, a glove, a garment, like a shirt or pants, a bag, a pouch, a purse, a backpack, a duffel bag, or preferably an article of footwear. Preferably, the textile element forms a textile footwear upper for an article of footwear or of an article of footwear, like, for example, a sports shoe, in particular a running shoe, a marathon shoe, a tennis shoe, a soccer shoe, a football shoe, an athletics shoe, and/or a climbing shoe, a hiking shoe, a skating shoe, a dancing shoe, a leisure shoe, a sneaker, and so on.

Depending on the apparel to be manufactured, the shaping carrier may at least partially be shaped according to the envisioned shape of the textile element. The shaping carrier may be a last, in particular a footwear last for shaping a textile footwear upper.

In the case of an article of footwear, the article of footwear may comprise a sole unit which may be joined to the textile footwear upper by any applicable method, for example, by glueing, stitching, or directly molding to a lower part and/or surface of the textile footwear upper. Furthermore, for connecting the sole unit to the textile footwear upper, the sole unit may be pre-assembled, pre-printed, and/or pre-molded, then affixed to the footwear last, heated at least in part, in particular where the sole unit is supposed to contact the textile footwear upper, and finally joined to the textile footwear upper while applying the thermoplastic filament onto the shaping carrier by providing the thermoplastic filament not only onto the shaping carrier but also at least onto a side of the sole unit.

The textile element may be a sheet element having a thickness, in particular a maximum thickness, being at least 10 times, preferably at least 50 times and most preferably at least 100 times, smaller than its width and/or length. The maximum thickness of the textile element may be at least 0.1 mm, at least 0.2 mm, or at least 0.3 mm. The maximum thickness of the textile element may be at most 5 mm, at most 4 mm, or at most 3 mm. The textile element may have a non-uniform thickness, and may include at least one thickening, like, for example, a cushioning, a padding and/or a plating, and/or at least one thinning, like a flexible zone and/or a ventilation zone.

The textile element comprises the thermoplastic filament, and may comprise, in addition, a second thermoplastic filament and in some embodiments even a third thermoplastic filament, that may be applied at least partially on top of the thermoplastic filament and/or the second thermoplastic filament. The textile element may comprise even further filaments. Preferably all filaments are polymeric. In some embodiments the textile element may consist of a single, in particular uninterrupted, thermoplastic filament. In other embodiments, the textile element may consist of several separate thermoplastic filaments, that may, however, be fused to each other.

The second, third and/or any further thermoplastic filament may be applied similar as explained for the thermoplastic filament. Accordingly, the explanations and embodiments provided for the thermoplastic filament may apply to the second, third and/or any further thermoplastic filament. Therefore, the second, third and/or further thermoplastic filament may be modified, in the same and/or in a further modification step of modifying, in particular during the application step, at least one application parameter related to the applying, in particular the spraying, of the second, third and/or further thermoplastic filament onto the shaping carrier and/or any previously applied thermoplastic filament.

The second, third and/or further thermoplastic filament may be detected, in the same and/or in a further detection step, in particular at least one filament parameter of the second/third and/or further thermoplastic filament, between the textile output unit and the shaping carrier.

In the same and/or in a further evaluation step of evaluating it may be evaluated whether the second, third and/or further thermoplastic filament as detected in the detection step meets at least one predetermined process requirement.

In the same and/or in a further modification step of modifying, the color of the second, third and/or further thermoplastic filament may be modified.

The textile output unit may comprise a respective discharge nozzle for discharging the thermoplastic filament, the second, the third and/or any further thermoplastic filament. In the alternative, the textile output unit may comprise a combined discharge nozzle for discharging the thermoplastic filament, the second, the third and/or any further thermoplastic filament, simultaneously and/or selectively.

It should be understood that if something is performed during a step, it can be performed at only a part of the duration of the step or during the whole step. Furthermore, it can be performed once or plural times during the step. Furthermore, it can be performed continuously or intermittently.

The at least one application parameter is related to the applying of the thermoplastic filament onto the shaping carrier. Accordingly, by modifying the at least one application parameter, the thermoplastic filament can be applied onto the shaping carrier in a modified way, in particular differently compared to another specific area of the textile element.

The at least one application parameter may be modified to achieve a specific property for the textile element, preferably in a specific area of the textile element.

The at least one application parameter may comprise at least one nozzle parameter of at least one filament discharge nozzle of the textile output unit.

The at least one nozzle parameter may comprise an opening degree of the at least one filament discharge nozzle. The opening degree may influence a flow rate of the thermoplastic filament during discharge out of the nozzle and therefore when applying onto the shaping carrier. The opening degree may influence at least one thermoplastic material parameter, such as a shear of the thermoplastic filament. A small opening degree may lead to a low flow rate and/or a high shear of the thermoplastic filament. Increased shear may lead to an enhanced molecular orientation, meaning that high shear conditions can promote alignment of polymer chains along the flow direction, which can increase the tensile strength and modulus of the resulting filament. Furthermore, increased shear may reduce viscosity. Furthermore, higher shear may lead to crystallinity effects: for example in semi-crystalline polymers, high shear may promote nucleation and faster crystallization, altering the thermal and mechanical profile of the filament. Furthermore, higher shear may lead to a particular surface finish and uniformity: Increased shear can lead to smoother surface morphology. Reduced shear may have an opposite effect. For example, in the absence of significant shear, polymer chains may not align sufficiently to nucleate crystalline regions, which may yield a more amorphous and flexible product.

In case of multiple filament discharge nozzles, the at least one nozzle parameter may be related to the activation and/or deactivation of one or all of the filament discharge nozzles. When modifying at least one nozzle parameter, a first nozzle may be deactivated and/or a second nozzle may be activated. Furthermore, the opening degree of each of the discharge nozzles may be modified.

The at least one nozzle parameter may comprise a distance between the at least one filament discharge nozzle and the shaping carrier. The distance may be a distance between the at least one filament discharge nozzle and at least one application point on the shaping carrier. The application point may be on the application path and may be moving along the application path dependent on a position where the thermoplastic filament is applied. A small distance may lead to less cooling of the thermoplastic filament when applying onto the shaping carrier, as well as a high precision of the applying of the thermoplastic filament onto the shaping carrier, and vice versa. A smaller distance may also lead to smaller loops on the shaping carrier, wherein a larger distance may lead to larger loops on the shaping carrier. The distance may be determined between the at least one filament discharge nozzle and the shaping carrier may be determined based on at least one sensor. The distance may be measured using one or more optical sensors (e.g., laser triangulation or time-of-flight), capacitive or inductive proximity sensors, and/or mechanical contact probes. Alternatively, image-based systems such as stereo vision and/or structured light may be employed to infer the distance. The distance may be determined in real-time.

The at least one nozzle parameter may comprise an orientation of the at least one filament discharge nozzle with respect to a normal surface of the shaping carrier. The orientation may comprise an angle relative to a normal on the shaping carrier at an application point. The application point may be on the application path and may be moving along the application path dependent on a position where the thermoplastic filament is applied. The orientation of at least one filament discharge nozzle may influence key parameters of filament deposition, including filament adhesion, layer uniformity, and surface quality. In particular, angling the nozzle away from the normal surface may facilitate improved filament flow dynamics, enable access to undercut or inclined features, and reduce deformation due to nozzle drag. Conversely, aligning the nozzle substantially perpendicular to the carrier surface may enhance vertical resolution and deposition accuracy. The nozzle orientation may therefore be selectively adjusted to optimize material deposition based on geometry, surface topology, and/or desired mechanical properties of the textile element.

The at least one nozzle parameter may comprise a movement, in particular a movement speed, of the at least one filament discharge nozzle. The at least one nozzle may be moved to achieved desired path segments, in particular the loops, on the shaping carrier along the application path. By way of modifying the movement, in particular the movement speed, the size and/or the geometry of the path segments may be modified. For example, the nozzle may be moved based on a round, in particular circular valve movement path, thereby producing a thermoplastic filament of a helix shape. The speed of the round movement may be modified to achieve a larger or smaller helix shape, and thereby larger or smaller loops on the shaping carrier. Example helix shape parameters that may be modified are helix diameter, helix pitch, winding angle, number of turns, and axial progression.

The at least one application parameter may comprise at least one thermoplastic material parameter of the thermoplastic filament, in particular of the thermoplastic material used for the thermoplastic filament.

The at least one thermoplastic material parameter may comprise a composition of the thermoplastic filament. The composition of the thermoplastic filament applied to the shaping carrier may be modified to tailor mechanical, thermal, optical, and/or chemical properties of the deposited filament. Such modifications may include the addition and/or omission of additives, fillers, pigments, foaming agents and/or reinforcing agents, including but not limited to fibers (e.g., carbon, glass), nanoparticles, plasticizers, stabilizers, flame retardants, rheological additives for modifying the viscosity and/or colorants. The base polymer matrix of the thermoplastic filament may also be varied, for example by blending different thermoplastic resins or by using copolymers. These compositional adjustments may be performed during filament extrusion, in-line prior to deposition, for example by adjusting a material used for the thermoplastic filament, and/or via coextrusion of multiple materials and/or filaments, enabling functional grading or localized property variation within the deposited structure.

The at least one thermoplastic material parameter may comprise at least one color of the thermoplastic filament. The color may be modified by introducing colorants, pigments, and/or dyes into a thermoplastic material used for the thermoplastic filament. Dyes may be soluble in the medium they are applied to, i.e., the thermoplastic material. Pigments may be insoluble but may be carried by the thermoplastic material used for the thermoplastic filament. Pigments may require a binder to adhere to a surface of the thermoplastic material used for the thermoplastic filament.

It is to be understood that the color of the thermoplastic filament may be directly linked to the composition of the thermoplastic filament. Therefore, modifying the composition may cause modifying the color. Said differently, modifying the color may comprise modifying the composition.

The at least one thermoplastic material parameter may comprise a temperature of the thermoplastic material before discharging as the thermoplastic filament via the textile output unit. The temperature of the thermoplastic filament may be actively controlled prior to discharge through the textile output unit by means of one or more heating or cooling elements positioned prior to the discharge. Such temperature modification may occur within a nozzle, a heating chamber, and/or a preconditioning unit of the textile output unit. Adjusting the filament temperature influences its viscosity, flow characteristics, and adhesion behavior upon contact with the shaping carrier and/or a previously applied thermoplastic filament and/or a previous path segment. Elevating the temperature may enhance interlayer bonding and surface smoothness, while controlled cooling may be used to improve structural stability, reduce sagging, and/or enable sharper definition in fine features. Temperature modification may be applied dynamically in response to geometry, material type, and/or desired mechanical properties.

The at least one thermoplastic material parameter may comprise at least one filament electrostatic property. The at least one filament electrostatic property may comprise a surface charge, a charge density, and/or an electric potential. The at least one filament electrostatic property may be selectively modified through various means, including the application of ionized air flows, corona discharge units, and/or electrostatic neutralization devices integrated within and/or near the textile output unit. Additionally, grounding elements and/or controlled application of electrostatic fields may be employed to influence charge behavior. By modifying the filament electrostatic property, undesired charge accumulation can be mitigated, filament positioning can be stabilized, and/or overall deposition quality can be improved. Such modification may be applied dynamically in response to a detected at least one filament electrostatic property to ensure consistent and reliable filament placement on the shaping carrier.

The at least one application parameter may comprise at least one filament discharge parameter related to the discharge of the thermoplastic filament from the textile output unit.

The at least one filament discharge parameter may comprise a filament flow rate of the thermoplastic filament when being discharged from the textile output unit. The filament flow rate may be selectively modified via the textile output unit, for example by adjusting extrusion pressure, feed speed of the filament, and/or the opening cross-section of at least one filament discharge nozzle. Such modification may be implemented through mechanical, pneumatic, and/or thermal actuation means. Varying the flow rate allows control over the volume of material deposited per unit time, which in turn affects layer thickness, deposition precision, and/or bonding strength between adjacent filament strands. Increased flow rates may be utilized for bulk infill and/or faster build-up, for example for a wadding effect and/or strengthening effect, while reduced flow rates may enhance resolution and surface detail, particularly in edge regions or fine features, and/or may lead to an increased flexibility of the textile element.

The at least one filament discharge parameter may comprise a filament discharge temperature of the thermoplastic filament when being discharged from the textile output unit and/or when forming the plurality of path segments on the shaping carrier. The temperature of the thermoplastic filament may be modified after it has been discharged from the textile output unit, for example through the use of directed airflow, localized cooling elements, radiant heat sources, and/or infrared emitters positioned proximate or after to the discharge of the textile output unit. Such post-discharge temperature control allows for selective thermal conditioning of the discharged thermoplastic filament to influence solidification behavior, crystallinity, and/or bonding characteristics. Actively cooling the thermoplastic filament may accelerate solidification, improve dimensional accuracy, and reduce warping or sagging in overhanging structures. Conversely, maintaining or producing elevated temperatures post-discharge may enhance interlayer adhesion, relieve internal stresses, and/or promote uniform surface finish across deposited layers.

During the application step a gas may be discharged from at least one gas discharge nozzle of the textile output unit for influencing the thermoplastic filament. The at least one application parameter may comprise at least one gas discharge parameter related to the discharge of the gas from the at least one gas discharge nozzle.

The at least one gas discharge parameter may comprise a gas discharge temperature of the gas when being discharged from the at least one gas discharge nozzle. The gas discharge temperature may be used to influence the thermoplastic filament before, during and/or immediately after deposition, in particular its behavior and/or its characteristics. The temperature of the gas may be selectively modified via integrated heating and/or cooling elements within the gas supply path and/or within or near the gas discharge nozzle. Adjusting the gas temperature enables control over the cooling rate, solidification behavior, and/or surface characteristics of the thermoplastic filament. Heated gas may be used to maintain filament malleability for improved interlayer bonding and/or smoothing, while cooled gas may accelerate solidification to enhance shape retention, reduce sagging, and/or improve the precision of fine features. The gas temperature may thus be dynamically controlled to optimize application quality based on geometry, material, and/or desired mechanical performance.

The at least one gas discharge parameter may comprise a gas flow rate of the gas through the at least one gas discharge nozzle. The gas flow rate may be modified by controlling parameters such as gas pressure, valve opening, and/or pump speed within the gas supply system. Modifying the gas flow rate affects the cooling dynamics and mechanical shaping of the thermoplastic filament. Increased gas flow rates may enhance convective cooling, thereby accelerating filament solidification and improving dimensional stability and surface detail. Conversely, reduced gas flow rates may allow slower cooling, promoting better interlayer bonding and surface smoothness. Modifying the gas flow rate may also influence deflection and/or shaping of the discharged thermoplastic filament. By adjusting the flow rate of the gas, the filament can be laterally displaced and/or guided during deposition, enabling improved placement accuracy, compensation for nozzle movement, and/or the creation of specific filament geometries. Controlled deflection may further assist in reducing filament sagging or bridging across gaps on the shaping carrier. The gas flow rate may be dynamically regulated to optimize filament properties based on the printing conditions and desired final characteristics.

The at least one gas discharge parameter may comprise a gas stream size of a gas stream of the gas when being discharged from the at least one gas discharge nozzle. The gas stream size may comprise a diameter of the gas stream and/or a geometry of the gas stream. The size of the gas stream may be modified by adjusting the nozzle geometry, such as changing the nozzle aperture, employing adjustable and/or interchangeable nozzle tips. Modifying the gas stream size affects the extent and area over which the gas interacts with the thermoplastic filament. A larger gas stream may provide more uniform cooling and/or shaping over a wider region of the filament, enhancing solidification and dimensional stability, whereas a smaller, more focused gas stream may enable precise localized control, such as targeted cooling and/or filament deflection. Accordingly, controlling the gas stream size allows optimization of filament properties and deposition quality in accordance with process requirements.

The at least one gas discharge parameter comprises a gas stream direction when being discharged from the at least one gas discharge nozzle. The direction of the gas stream may be modified by adjusting the orientation of the gas discharge nozzle itself, employing pivotable and/or rotatable gas discharge nozzles and/or nozzle assemblies, and/or by using adjustable flow guides and/or vanes within the gas path. Changing the gas stream direction enables control over the lateral and/or angular deflection of the thermoplastic filament during or after discharge, which can improve filament placement accuracy, reduce sagging, and/or facilitate the formation of complex geometries. Additionally, directional control of the gas stream can optimize cooling distribution along the filament, thereby influencing solidification rates and bonding quality.

The at least one application parameter may comprise at least one temperature parameter. The temperature parameter may comprise a temperature of the shaping carrier, in particular of the footwear last, when applying the thermoplastic filament onto shaping carrier, in particular the footwear last. Temperature modification may be achieved through integrated heating and/or cooling elements, such as resistive heaters, thermoelectric modules, and/or fluid-based thermal control systems embedded within and/or in contact with the shaping carrier. Varying the shaping carrier temperature affects the thermal interaction between the shaping carrier, in particular the shaping carrier surface, and the thermoplastic filament, thereby influencing filament adhesion, solidification rate, and layer bonding quality. Elevated shaping carrier temperatures may promote improved bonding and reduce internal stresses, while lower temperatures may enhance dimensional accuracy and support the formation of fine features through more rapid filament solidification.

The method may further comprise a detection step of detecting the thermoplastic filament, in particular at least one filament parameter of the thermoplastic filament, between the textile output unit and the shaping carrier. The detection step may be configured as set out in the following.

The method may further comprise an evaluation step of evaluating whether the thermoplastic filament as detected in the detection step meets at least one predetermined process requirement. The evaluation step may be configured as set out in the following.

During the modification step the at least one application parameter may be modified based on the result of the evaluation step. Accordingly, the at least one application parameter may be modified to meet the predetermined process requirement. The modification step may be configured as set out in the following.

As explained, the method may comprise a modification step of modifying, in particular during the application step, at least one application parameter related to the applying, in particular the spraying, of the thermoplastic filament onto the shaping carrier, wherein the at least one application parameter comprises at least one thermoplastic material parameter of the thermoplastic filament, wherein the thermoplastic material parameter comprises at least one color of the thermoplastic filament. Accordingly, the method may comprise a modification step of modifying at least one color of the thermoplastic filament, in particular of the thermoplastic material. The color of the thermoplastic filament may be modified before the thermoplastic filament is deposited onto the shaping carrier. The color may be modified by introducing colorants, pigments, and/or dyes into a thermoplastic material used for the thermoplastic filament. Dyes may be soluble in the medium they are applied to, i.e., the thermoplastic material. Pigments may be insoluble but may be carried by the thermoplastic material used for the thermoplastic filament. Pigments may require a binder to adhere to a surface of the thermoplastic material used for the thermoplastic filament. A modified appearance by a modified filament color may serve functional, aesthetic, identification and/or personalization purposes. Functionally, color may be used to indicate material type, manufacturing stage, and/or specific performance characteristics such as specific material property characteristics (e.g., heat resistance, conductivity). Aesthetically, modified color enables customized patterns, branding, and/or design features in the textile article. Furthermore, the optical properties associated with specific colors, such as reflectivity and/or light absorption, may influence the thermal behavior and/or appearance of the deposited material. Personalization may be useful to increase a wearer's acceptance of the textile element. For example, varying the color of the thermoplastic filament along the application path 28 enables the creation of visually distinct zones, such as stripes, gradients, logos, and/or ornamental patterns. For example, in one embodiment, a filament dyed with a high-contrast colorant, such as carbon black, may be used to form sharp outlines and/or graphical symbols on an otherwise light-colored textile element. In another embodiment, thermochromic or photochromic dyes may be added to the filament, enabling the textile element to change appearance dynamically in response to temperature or UV exposure.

The color may be modified from at least a first color to a second color. Accordingly, the first and the second color may differ from each other. The modifying may be effected via a multi-channel extrusion system, a filament feed changer, and/or a controlled dosing unit configured to discontinue a first colorant, pigment and/or dye and initiate a second colorant, pigment and/or dye.

The color may be modified with a continuous transition from the first color to the second color. Such continuous transition may be effected by dynamically varying the relative concentration of two or more colorants, pigments, and/or dyes introduced into the thermoplastic material or thermoplastic material stream used for the thermoplastic filament, for example via controlled dosing systems upstream of the discharge nozzle. The dosing may be adjusted in real time. The continuous transition may effect a gradient effect along the filament. In an option, pre-compounded filament segments of differing colors may be fused or blended in a melt zone with controlled mixing to generate a gradual color shift. This enables seamless multicolor transitions for aesthetic, functional, and/or informational purposes in the textile element.

The color may be modified with an abrupt transition from the first color to the second color. Such an abrupt transition may be implemented by rapidly switching the supply of a thermoplastic material from a first colorant, pigment and/or dye to a second, different colorant, pigment and/or dye. Additionally, abrupt color modification may be realized by segmenting pre-colored filaments and feeding them sequentially into a melt zone with a controlled transition point. This method allows for distinct color boundaries in the deposited filament, suitable for patterning, labeling, and/or functional zoning within the textile element.

The modifying may comprise modifying the at least one color after discharge from the textile output unit, in particular after discharge of a nozzle of the textile output unit. The nozzle comprise the filament discharge nozzle of the textile output unit. Such after discharge color modification may be achieved by applying one or more colorants, pigments, and/or dyes directly to the surface of the thermoplastic filament using techniques such as inkjet printing, spraying, coating, and/or laser-induced color change. Alternatively, localized heating and/or irradiation may be applied, in particular to activate thermochromic and/or photochromic additives embedded in the filament, thereby altering its color. Post-discharge color modification enables high-resolution and targeted coloring without altering the composition of the base material used for the thermoplastic filament. The modification may be performed while the filament remains in a semi-molten and/or thermally active state to enhance color adhesion and/or absorption.

As said, at least one colorant, pigment, and/or dye may be applied to the thermoplastic filament. Said colorant, pigment and/or dye may be applied based on an airstream carrying the colorant, pigment and/or dye. The airstream may be modified quickly and/or continuously, thereby allowing quick and/or continuous modification of the at least one color.

The modifying may comprise modifying the at least one color prior to discharge from the textile output unit, in particular prior to discharge from a nozzle of the textile output unit. The nozzle comprise the filament discharge nozzle of the textile output unit. Such color modification may be achieved by introducing one or more colorants, pigments, and/or dyes into the thermoplastic material, in particular a melted form thereof, upstream of a discharge nozzle of the textile output unit. The colorants, pigments and/or dyes may be added in liquid, powder, and/or pellet form and/or dosed into the melt stream using controlled dosing systems to achieve a desired coloration. Alternatively, differently colored thermoplastic materials may be blended in a mixing chamber prior to discharge from the at least one discharge nozzle, allowing for uniform or gradient coloration. The color-modified melt may then be output through the nozzle, enabling the extrusion of filament with controlled and consistent color characteristics.

The thermoplastic filament is physically treated for modifying the color of the thermoplastic filament. Such physical treatment may include exposing the filament to localized heat, pressure, and/or electromagnetic radiation, such as laser beams, UV light, and/or infrared energy, to induce a change in color through activation of in particular embedded color-changing agents, such as thermochromic and/or photochromic compounds. Alternatively, surface texture alteration via embossing, mechanical deformation, and/or microstructuring may influence light reflection and/or scattering properties, thereby altering the perceived color of the filament. These physical treatment methods allow for selective, non-chemical modification of filament appearance while maintaining the composition of the base material used for the thermoplastic filament.

The color of the thermoplastic filament may be modified locally. Local color modification may be achieved by selectively applying colorants, pigments, and/or dyes to the filament using techniques such as inkjet printing, micro-dispensing, and/or localized coating, before the filament is deposited onto the shaping carrier. Alternatively, local color changes before the filament is deposited onto the shaping carrier may be effected by targeted exposure of the thermoplastic filament to heat, light, and/or other energy sources, such as laser irradiation and/or UV activation, capable of inducing color change in pigment-loaded or chromogenic materials. This enables high-resolution, position-specific color modification for producing detailed patterns, markings, and/or gradients in the deposited structure.

The color of the thermoplastic filament may be modified, in particular uniformly, for at least a section of the thermoplastic filament. Thereby, a section of the thermoplastic filament with the modified color may be generated.

The color of the thermoplastic filament may be modified for at least one specific area of the textile element. Accordingly, the specific area may be provided with a specific appearance, such as a branding sign.

The color may be linked to at least one specific property of the textile element. Thereby, the color may be used to indicate a specific property of the textile element.

The color may be modified for indicating at least one specific property in at least one specific area of the textile element. Accordingly, this allows a user to easily detect the location of the specific property on the textile element. Furthermore, the indication may be beneficially used for advertising purposes.

The at least one color comprises at least one of a color hue, a color saturation, and a color brightness of the thermoplastic filament. Color hue may refer to the dominant wavelength of the color perceived, corresponding to basic color types such as red, blue, and/or green. Color brightness may specify the perceived intensity of light emitted or reflected from the color, ranging from dark to light. Color saturation may indicate the purity and/or intensity of the hue, with higher saturation representing vivid, intense colors and lower saturation appearing more muted or grayish. These parameters may be individually or collectively adjusted or detected to characterize or modify the visual appearance of the filament.

The modifying may comprise adding at least one color pellet to the thermoplastic material used as the thermoplastic filament. The color pellet may be added such that mixing and/or dispersion with the preferably molten thermoplastic material takes place. The color pellet may be added to a barrel of the textile output unit. Depending on the position of adding the color pellet to the barrel, more or less mixing may be induced and thereby the color transition may be more or less abrupt. The color pellet may comprise a masterbatch. Said differently, color pellets may be called masterbatches. Color pellets comprise a high concentration of pigments and/or dyes dispersed within a carrier resin compatible with the base thermoplastic, here thermoplastic material. For instance, a red masterbatch may include organic pigments such as perylene red (PR 254) or azo-based pigments like PR 170, while blue colorants can be provided using phthalocyanine blue (PB 15:3). Yellow coloration may be achieved through pigments such as PY 74 or PY 83. White masterbatches typically incorporate titanium dioxide (TiO₂) to provide opacity and brightness, whereas black masterbatches often rely on finely dispersed carbon black. In addition to standard colorants, effect pigments may also be employed to produce specialized visual and/or functional effects. Pearlescent masterbatches, for example, comprise mica or bismuth oxychloride to generate an iridescent or nacre-like appearance, while metallic masterbatches use aluminum flakes or similar particles to impart a metallic sheen. Furthermore, phosphorescent pigments such as strontium aluminate may be used in glow-in-the-dark masterbatches, and fluorescent dyes can be included to produce vivid, UV-reactive colors. Advanced methods may also incorporate thermochromic and/or photochromic pigments, which respond to changes in temperature and/or light exposure, respectively. The carrier resin of the color pellet is selected to ensure compatibility with the molten thermoplastic material-for example, polyethylene-based masterbatches are used with polyethylene, polypropylene-based masterbatches with polypropylene, and so forth-thereby ensuring homogeneous dispersion and optimal performance during melt processing of the thermoplastic material used for the thermoplastic filament.

The method may further comprise a position detection step of detecting a position on the shaping carrier to which the thermoplastic filament is or will be discharged. During the modification step the at least one color of the thermoplastic filament may be modified based on the position on the shaping carrier. According to an optically based determination, the shaping carrier may be equipped with reference markings and/or encoded patterns that are optically detected by at least one position detection unit, such as an image sensor, such as at least one camera, to determine absolute or relative position. Furthermore, position may be determined using contact-based sensors, such as limit switches and/or mechanical probes. In addition, non-contact methods may be used such as laser triangulation, ultrasonic ranging, and/or inductive and/or capacitive proximity sensing. In further embodiments, the shaping carrier may be mounted on a movable stage with integrated position encoders and/or stepper motors, allowing for precise tracking of spatial coordinates.

The method may further comprise a detection step of detecting the thermoplastic filament, in particular at least one filament parameter of the thermoplastic filament, between the textile output unit and the shaping carrier. The detection step may be configured as set out in the following.

The method may further comprise an evaluation step of evaluating whether the thermoplastic filament as detected in the detection step meets at least one predetermined process requirement. The process requirement may comprise at least one predetermined color requirement. The evaluation step may be configured as set out in the following.

During the modification step the at least one application parameter may be modified based on the result of the evaluation step. Accordingly, the at least one application parameter may be modified to meet the predetermined process requirement. The modification step may be configured as set out in the following.

As explained, the method may comprise a detection step of detecting the thermoplastic filament, in particular at least one filament parameter of the thermoplastic filament, between the textile output unit and the shaping carrier. It is to be understood that only a part of or the whole thermoplastic filament between the textile output unit and the shaping carrier may be detected. Furthermore, it may be continuously and/or intermittently detected. The intermitted detecting may be performed periodically, in particular every millisecond, every 10 milliseconds, every 100 milliseconds, every second or the like.

In the detection step at least one filament shape parameter of the thermoplastic filament may be detected.

The at least one filament shape parameter may comprise at least one filament helix shape parameter. The at least one helix shape parameter may be beneficially detected, as it may influence the path segments, in particular the loop size, on the shaping carrier along the application path. One or more helix shape parameters - such as helix diameter, helix pitch, winding angle, number of turns, and axial progression - may be detected, for example via sensors. These parameters influence the spatial distribution, mechanical properties, and surface texture of the deposited filament structure. For example, variations in pitch and diameter can affect the density and elasticity of the deposited material, while the winding angle may impact bonding behavior and structural anisotropy. Precise control over helix geometry enables tailoring of the filament deposition to meet specific functional or aesthetic requirements of the textile element.

The at least one filament shape parameter may comprise at least one filament cross-section shape parameter. The at least one filament cross-section shape parameter may comprise filament width, height (or thickness), diameter, cross-section shape, aspect ratio, and/or edge contour, in particular between the textile output unit and the shaping carrier. At least one of said parameters may be determined using optical sensors, profilometers, and/or imaging systems, in particular positioned downstream of the at least one discharge nozzle. The filament cross-section shape influences the material distribution, layer bonding quality, and surface finish of the deposited thermoplastic filament. For instance, a wider or flatter cross-section may promote enhanced interlayer adhesion and faster area coverage, while a more rounded and/or narrower profile may improve feature resolution and enable finer detailing. Real-time detection and modification of these parameters allow for consistent filament deposition tailored to specific application or design requirements.

The at least one filament shape parameter may comprise at least one filament trajectory parameters. The at least one filament trajectory parameter may comprise a trajectory angle, a curvature, a velocity vector, a discharge height, and/or lateral displacement. These parameters influence the landing position, orientation, and deposition quality of the thermoplastic filament on the shaping carrier. For example, variations in trajectory angle and/or curvature may affect filament alignment and bonding with previously deposited material, while discharge height and velocity influence the filament's cooling behavior and deformation, in particular upon contact. At least one optical sensor and/or motion tracking system may be used. Accurate detection and modification of filament trajectory parameters allow for enhanced precision, repeatability, and structural performance of the deposited thermoplastic filament.

In the detection step at least one filament material parameter of the thermoplastic filament may be detected.

The at least one filament material parameter may comprise at least one filament color of the thermoplastic filament. The filament color may comprise color hue, a color saturation, and a color brightness. The filament color may further comprise a gradient of color of the thermoplastic filament, in particular within a section of the thermoplastic filament. Filament color may indicate material composition, additive content, and/or temperature-dependent changes in optical properties. The detected color can serve as a quality control parameter, verifying material identity and/or uniformity, and may also correlate with processing conditions, such as thermal exposure and/or cooling rate. Additionally, filament color can influence the optical, thermal, and/or aesthetic properties of the deposited filament, including light absorption, heat retention, and/or visual appearance. Accordingly, real-time color detection enables process monitoring and adaptive modification to ensure consistent material characteristics and product quality. The color of the filament may be detected during or immediately after discharge using one or more optical sensors, such as color cameras, spectrometers, and/or photodiodes, in particular calibrated for color recognition.

The at least one filament material parameter may comprise at least one filament material quantity. The at least one filament material quantity may be detected using one or more monitoring systems, such as a flow sensor, an extrusion pressure sensor, a filament feed rate detector, and/or an optical measurement device configured to assess material volume over time. The filament material quantity directly influences the thickness, density, and/or structural integrity of the deposited material. Insufficient discharge may lead to underfilling, weak interlayer bonding, and/or dimensional inaccuracies, while excessive discharge may cause material buildup, deformation, and/or loss of geometric fidelity. Accurate detection and modification of the discharge quantity allow for precise material deposition, improved print quality, and consistency in the resulting textile element.

The at least one filament material parameter may comprise at least one filament temperature. The at least one filament temperature may be detected using one or more temperature sensing devices, such as an infrared sensor, a thermal camera, and/or contact-based thermocouples positioned proximate to the discharge path. The filament temperature at the point of discharge is a parameter influencing viscosity, flow behavior, and/or bonding performance with the shaping carrier and/or underlying layers. A filament discharged at too low a temperature may exhibit poor adhesion and insufficient fusion, while excessive temperature may lead to material degradation, deformation, and/or surface defects. Real-time detection of filament temperature enables precise thermal control, ensuring consistent material properties and high-quality deposition.

The at least one filament material parameter may comprise at least one filament electrostatic property. The at least one filament electrostatic property may comprise a surface charge, a charge density, and/or an electric potential. The at least one filament electrostatic property may be detected using suitable sensing devices, including electrostatic field meters, charge sensors, and/or non-contact voltmeters positioned along the discharge path. The filament electrostatic property can influence its interaction with the shaping carrier and/or with adjacent filament strands. Excessive or uncontrolled electrostatic charge may result in filament misalignment, repulsion effects, and/or attraction of airborne particles, thereby affecting deposition accuracy, surface quality, and/or material consistency. Detecting electrostatic properties in real time allows for process monitoring and corrective modification to maintain stable deposition conditions.

In the detection step at least one filament flow parameter may be detected.

The at least one filament flow parameter may comprise at least one filament continuity. The at least one filament continuity of the thermoplastic filament may be detected using one or more monitoring systems, such as an optical sensor, a filament presence detector, a load cell, and/or a flow rate sensor positioned along the discharged thermoplastic filament. Filament continuity may be understood as the uninterrupted and/or consistent presence of material during and/or after discharge, in particular between the textile output unit and the shaping carrier. Disruptions in continuity, such as breaks, gaps, and/or intermittent flow, can lead to defects in the textile element, including weak bonding, surface irregularities, and/or compromised mechanical integrity. Continuous monitoring of filament continuity allows for immediate detection of anomalies and enables corrective action, such as modifying extrusion parameters or initiating a controlled stop, thereby ensuring reliable and uniform filament deposition.

The at least one filament parameter of the thermoplastic filament may comprise the at least one filament shape parameter, the at least one filament material parameter, the at least one filament electrostatic property, and/or the at least one filament flow parameter.

In the detection step the thermoplastic filament, in particular its presence, position, continuity and/or at least one of its properties, may be detected. In the detection step, the thermoplastic filament may be optically detected. Optical detection may be performed using cameras, photodiodes, and/or laser-based systems, for example to monitor the discharged filament, detect flow interruptions, and/or assess alignment with the shaping carrier. The camera may be configured as a high-speed camera. Optical detection of the temperature of the thermoplastic filament may be performed at least based on an infrared camera and/or thermal camera. In addition or alternatively, non-optical detection methods may be employed, including capacitive sensors, for example for material presence, inductive sensors, for example for conductive filaments, ultrasonic sensors for example for flow monitoring, and/or thermal sensors, for example infrared sensors for detecting the emitted heat of the filament or the temperature of the filament, and/or radar-based sensors, for example for monitoring filament position and/or motion through radio frequency reflection and/or Doppler shift. These detection systems may operate individually or in combination, and/or may operate in real time to enable process monitoring, quality assurance, and/or adaptive modification of the filament application, even under challenging environmental and/or visibility conditions.

In the detection step, data may be generated related to the detected thermoplastic filament. The data may be generated by the at least one sensor detecting the thermoplastic filament. The data may comprise image data, thermal data and/or signal data of the thermoplastic filament.

As mentioned above, the camera may be configured as a high-speed camera. In particular, the detection step may comprise using a high-speed camera for capturing images of the thermoplastic filament discharged from the filament discharge nozzle. The high-speed camera may be oriented such that it captures the thermoplastic filament during deposition. To monitor the shape of the filament, the high-speed camera may comprise a macro lens. In line of sight of the high-speed camera and, in particular, opposite to the high-speed camera in relation to the nozzle, a backlight illumination source may be installed. The backlight illumination source may comprise a diffuse light panel, an LED panel, a display, or any other light source that provides uniform illumination. The backlight illumination source may enhance the contrast of images captured by the high-speed camera.

In the detection step, the thermoplastic filament exiting the filament discharge nozzle may be illuminated from behind and captured by the high-speed camera against a uniformly lit background. The backlight illumination provides a high-contrast silhouette image of the filament as it exits the nozzle, enabling detection and measurement of the helix parameters of the thermoplastic filament in flight. The helix parameters may include the helix shape of the thermoplastic filament as it exits the filament discharge nozzle, the pitch of the helix, the filament diameter, and the regularity of the helical pattern. The high-speed camera may be connected to an image processing unit configured to analyze the captured images in real time and to compare the measured helix parameters against predefined target ranges stored in a control unit. If the measured parameters deviate from the target ranges, the control unit may adjust at least one application parameter as described in the modification step, such as a filament discharge temperature and/or a filament flow rate to restore compliance with predetermined specification. The high-speed camera may be operated at a frame rate sufficient to resolve individual oscillations of the helical thermoplastic filament during deposition. In particular, the frame rate may be at least 500 frames per second, preferably at least 1000 frames per second, and most preferably at least 5000 frames per second, in order to capture sharp, motion-blur-free images of the thermoplastic filament in flight. The exposure time of the high-speed camera may accordingly be set to a sufficiently short value, in particular shorter than 1/10000 s, so as to freeze the motion of the thermoplastic filament in each individual frame. The backlight illumination source may be pulsed in synchrony with the exposure of the high-speed camera to maximize illumination intensity during each exposure while minimizing thermal load on the backlight illumination source. The pulsed backlight illumination source may be triggered by a synchronization signal derived from the high-speed camera, thereby ensuring consistent illumination for each captured frame. The synchronization may be managed by the control unit or by a dedicated trigger unit communicatively connected to the high-speed camera and the backlight illumination source.

The spatial arrangement of the high-speed camera and the backlight illumination source relative to the filament discharge nozzle may be fixed, in particular rigidly mounted with respect to the textile output unit, so that the field of view of the high-speed camera consistently covers the region between the filament discharge nozzle and the shaping carrier in which the thermoplastic filament travels in flight. The high-speed camera and the backlight illumination source may be arranged on opposing sides of the thermoplastic filament, such that the thermoplastic filament is positioned between the high-speed camera and the backlight illumination source along an optical axis. The optical axis may be oriented substantially perpendicular to the discharge direction of the filament discharge nozzle, or at any other suitable angle that allows the helix shape, diameter, and pitch of the thermoplastic filament in flight to be observed. The backlight illumination source may be positioned at a distance from the thermoplastic filament such that the illuminated background appears substantially uniform across the full field of view of the high-speed camera. The high-speed camera and/or the backlight illumination source may be mounted on an adjustable support to allow repositioning for calibration purposes or to adapt to different nozzle geometries and/or filament trajectories. A calibration target of known geometry may be used to establish a pixel-to-length conversion factor for the image processing unit, thereby enabling quantitative measurement of the helix parameters of the thermoplastic filament in physical units.

As explained, the method may comprise an evaluation step of evaluating whether the thermoplastic filament as detected in the detection step meets at least one predetermined process requirement.

In the evaluation step, the evaluating may be performed by a control unit and/or processor executing one or more software algorithms configured to analyze the detected thermoplastic filament, in particular data related to the detected thermoplastic filament.

The evaluating may be performed in real time or close to real time. This allows to react to the result of the evaluation step quickly.

The evaluating may be based on edge detection, pattern recognition, and/or machine vision techniques, for example to assess the filament's shape, width, and/or alignment. Thermal data may be compared against a predetermined temperature value and/or predetermined temperature range, for example to verify proper melt condition. Signal analysis of ultrasonic and/or radar returns may be used to assess filament motion and detect breaks or irregularities.

In the evaluation step, the detected thermoplastic filament may be compared to the at least one predetermined process requirement. The process requirement may be a at least one reference value, a threshold value, and/or a tolerance value. The at least one predetermined process requirement may be provided by a user, may be derived from literature and/or may be provided by machine learning models.

The evaluation step may provide at least one result of the evaluation step. The at least one result may comprise an indication whether the thermoplastic filament as detected in the detection step meets the at least one predetermined process requirement. Furthermore, the at least one result may comprise a deviation amount, i.e., how much the thermoplastic filament deviates from the predetermined process requirement. For example, if the process requirement comprises a predetermined temperature of the thermoplastic filament, the result of the evaluation step may be how much the detected temperature of the thermoplastic filament deviates from the predetermined temperature.

The result may be stored in a memory. The memory may store the result along with historic results of the evaluation step.

The at least one predetermined process requirement may comprise at least one predetermined application parameter and/or at least one filament parameter. The predetermined application parameter may comprise one of the application parameters as explained in the foregoing, wherein the application parameter is predetermined. Likewise, the predetermined filament parameter may comprise one of the filament parameters as explained in the foregoing, wherein the filament parameter is predetermined. For example, the predetermined process requirement may comprise at least one nozzle parameter, at least one thermoplastic material parameter and/or at least one filament discharge parameter. Furthermore, the predetermined process requirement may comprise at least one filament parameter as explained in the foregoing, wherein the filament parameter is predetermined. For example, the at least one predetermined filament parameter may comprise at least one filament shape parameter, at least one filament material parameter, at least one filament electrostatic property, and/or at least one filament flow parameter. The predetermined process requirement may comprise at least one predetermined color requirement.

For example, in the evaluation step, it may be evaluated whether the thermoplastic filament meets the at least one predetermined color requirement. For example, the result of the evaluation step may be how much the detected color deviates from a predetermined color, for example in terms of color hue, color saturation, and/or color brightness of the thermoplastic filament.

As said, the method may comprise a modification step of modifying, in particular during the application step, at least one application parameter related to the applying, in particular the spraying, of the thermoplastic filament onto the shaping carrier, wherein during the modification step the at least one application parameter is modified based on the result of the evaluation step.

By way of modifying based on the result of the evaluation step, the at least one application parameter may be modified, in particular controlled, to meet the predetermined application parameter and/or the predetermined filament parameter. For example, when the result of the evaluation step indicates that the color of the thermoplastic filament deviates from the predetermined color by a certain extent, the color of the thermoplastic filament may be modified by the certain extent to meet the predetermined color.

According to an embodiment, the modifying based on the result of the evaluation step may be repeatedly performed.

According to an embodiment, the modifying based on the result of the evaluation step may comprise controlling the at least one application parameter to meet the predetermined application parameter and/or the predetermined filament parameter.

Controlling can comprise automatic controlling, for example based on an algorithm comprising control engineering technology and/or based on an artificial intelligence model such as a machine learning model.

The at least one application parameter may comprise at least one thermoplastic material parameter of a thermoplastic material used for the thermoplastic filament.

The at least one application parameter may comprise at least one filament discharge parameter related to the discharge of the thermoplastic filament from the textile output unit.

In the application step, a gas may be discharged from at least one gas discharge nozzle of the textile output unit influencing the thermoplastic filament. The at least one application parameter may comprise at least one gas discharge parameter related to the discharge of the gas from the at least one gas discharge nozzle.

The application parameter may be modified based on a corresponding predetermined application parameter, in particular a result of the evaluation step related to a corresponding predetermined application parameter. For example, the predetermined application parameter may be a predetermined filament discharge temperature. The result of the evaluation step may comprise that the filament discharge temperature deviates from the predetermined filament discharge temperature by a certain amount. Based on the result of the evaluation step, the filament discharge temperature may be modified in the modification step to meet the predetermined filament discharge temperature.

An application parameter may be modified based on a non-corresponding predetermined application parameter, in particular a result of the evaluation step related to a non-corresponding predetermined application parameter. For example, the predetermined application parameter may comprise a predetermined filament discharge temperature, and for example
- the temperature of the thermoplastic material before discharging as the thermoplastic filament via the textile output unit; and/or
- the at least one gas discharge parameter, such as the gas discharge temperature, the gas flow rate and/or the gas stream direction,
may be modified to meet the predetermined filament discharge temperature.

The application parameter may be modified based on the at least one filament parameter, in particular a result of the evaluation step related to the at least one filament parameter. For example, the at least one filament parameter may comprise at least one filament cross-section shape parameter and/or at least one filament trajectory parameter, and for example
- at least one nozzle parameter, such as the opening degree of the at least one filament discharge nozzle and/or the orientation of the at least one filament discharge nozzle; and/or
- at least one filament discharge parameter, such as the filament flow rate and/or the filament discharge temperature; and/or
- at least one gas discharge parameter, such as the gas discharge temperature and/or the gas flow rate, may be modified to meet the predetermined filament cross-section shape parameter and/or the predetermined filament trajectory parameter.

The thermoplastic filament may be deposited onto the shaping carrier so that a surface area covered by the thermoplastic filament corresponds to a surface area covered by the textile element, in particular thereby forming the base element. Alternatively, the thermoplastic filament may be deposited onto the shaping carrier so that a surface area covered by the thermoplastic filament is smaller than the surface area covered by the textile element.

The second thermoplastic filament may be deposited only in the at least one specific area or only in a plurality of such specific areas. There may be, in particular, areas of the base element and/or of the thermoplastic filament that are deliberately left uncovered by the second thermoplastic filament.

Furthermore, the thermoplastic filament may be deposited only in the at least one specific area or only in a plurality of such specific areas, which are separated from each other, and the second thermoplastic filament may be applied on top of the thermoplastic filament. The thermoplastic filament may be applied to the shaping carrier so that some areas of the shaping carrier are deliberately left uncovered by the thermoplastic filament, wherein these areas may at least partially be covered with the second thermoplastic filament. In doing so, the second thermoplastic filament may be deposited onto the shaping carrier and/or the thermoplastic filament so that a surface area covered by the second thermoplastic filament corresponds to the surface area covered by the textile element. Alternatively, the second thermoplastic filament may be deposited onto the shaping carrier and/or the thermoplastic filament so that a surface area covered by the second thermoplastic filament is smaller than the surface area covered by the textile element.

The at least one specific area may have a surface size of at most 80 %, at most 60 %, at most 40 %, at most 20 %, or at most 10 % of the total surface size of the textile element. The surface size of the at least one specific area may be at most 200 cm², at most 150 cm², at most 100 cm², or at most 50 cm².

The third thermoplastic filament may be at least partially applied onto the shaping carrier and/or on top of the thermoplastic filament and/or on top of the second thermoplastic filament. The third thermoplastic filament may be deposited onto the shaping carrier and/or the thermoplastic filament and/or the second thermoplastic filament so that a surface area covered by the third thermoplastic filament corresponds to the surface area covered by the textile element. Alternatively, the third thermoplastic filament may be deposited onto the shaping carrier and/or the thermoplastic filament and/or the second thermoplastic filament so that a surface area covered by the third thermoplastic filament is smaller than the surface area covered by the textile element. The third thermoplastic filament may in particular cover the second thermoplastic filament so that the thermoplastic filament and the third thermoplastic filament may form a pocket for the second thermoplastic filament. The third thermoplastic filament may be applied so as to constitute a preferably uninterrupted upper cover and/or outer cladding of the textile element.

The thermoplastic filament and/or the second thermoplastic filament and/or the third thermoplastic filament may be applied in a solid state onto the shaping carrier and/or onto an underlying layer of the thermoplastic filament and/or the second thermoplastic filament, and/or the third thermoplastic filament, and may be heated afterwards, for example by hot air blowing, heat irradiation, or any other applicable method, for fusing the thermoplastic filament and/or the second thermoplastic filament and/or the third thermoplastic filament with each other and/or with themselves.

Alternatively, and preferably, the thermoplastic filament and/or the second thermoplastic filament and/or the third thermoplastic filament may be applied in an at least partially molten and/or liquid state onto the shaping carrier and/or onto an underlying layer of the thermoplastic filament and/or the second thermoplastic filament and/or the third thermoplastic filament, the thermoplastic filament and/or the second thermoplastic filament and/or the third thermoplastic filament being hereby fused with each other and/or with themselves upon hardening. Before or while applying the thermoplastic filament and/or the second thermoplastic filament and/or the third thermoplastic filament, the shaping carrier and/or the respective underlying filament may be heated, in particular via a heating element integrated into the shaping carrier and/or via an external heating unit, for example a hot air blower, an IR-irradiation unit, a laser, or any other applicable heating unit.

The thermoplastic filament and/or the second thermoplastic filament and/or the third thermoplastic filament may be provided as strands, in particular continuous strands, preferably having a circular cross-section. During application and before fusing, the thermoplastic filament and/or the second thermoplastic filament and/or the third thermoplastic filament may have a maximum thickness of 10 µm to 1000 µm, of 50 µm to 500 µm, of 50 µm to 300 µm, or of 75 µm to 250 µm. Herein, the "maximum thickness" may be the maximum cross-sectional extension of the respective thermoplastic filament. If the respective thermoplastic filament has a circular cross-section, the maximum thickness is equal to the diameter of the respective thermoplastic filament.

In some embodiments of the invention the second thermoplastic filament may at least partly be applied as a plurality of, preferably partially superimposed, second path segments, in particular second loops, along a second application path in the at least one specific area. Thus, additional material may be provided in the at least one specific area in a controlled and/or ordered manner. In particular the additional materials can be provided at relatively high density for additional effects like strengthening, plating, etc.

Furthermore, the third thermoplastic filament may at least partly be applied as a plurality of, preferably partially superimposed, third path segments, in particular third loops, along a third application path in the at least one specific area. Thus, even more material may be provided in the at least one specific area in a controlled and/or ordered manner for increased or additional effects.

The path segments, in particular the loops, and/or the second path segments, in particular the second loops, and/or the third path segments, in particular the third loops, may advantageously be at least partially overlapping with each other and/or with themselves and may at least partially be located on top of each other. The path segment and/or the second path segments and/or the third path segments may be embodied as recurring patterns, in particular recurring loops, of the thermoplastic filament and/or the second thermoplastic filament and/or the third thermoplastic filament. By at least partially overlapping and fusing neighboring filament lines, the textile element may be shaped.

The textile element may be a laid textile sheet product. Herein, the path segments, in particular the loops, and/or the second path segments, in particular the second loops, and/or the third path segments, in particular the third loops, may not be inter-looped, entangled and/or chain linked with each other. The path segments, in particular the loops, and/or the second path segments, in particular the second loops, and/or the third path segments, in particular the third loops, are arranged partially on top of each other, i.e. stacked on each other, in particular along the application path and/or the second application path and/or the third application path.

The partially superimposed path segments, in particular loops, may be arranged along the application path one after another. At least some, or the majority, i.e. more than 50 %, or essentially all, of the superimposed segments, in particular loops, except the last path segment along the application path may be partially arranged underneath their next adjacently arranged segment, in particular loop. In other words, the superimposed path segments, in particular loops, may form a structure in which the path segments, in particular loops, partially overlap and in which starting from the first path segment, in particular loop, every path segment, in particular loop, except the last one is arranged partially underneath its next adjacent path segment, in particular loop. The same may be true for the second path segments, in particular second loops, and/or for the third path segments, in particular third loops, that are arranged along the second application path and/or the third application path, respectively.

Each partially superimposed path segment, in particular loop, except the last one, may be arranged along the filament path underneath their at least 2, at least 5, at least 10, or at least 15, next adjacently arranged path segments, in particular loops. Again, the same may be true for the second path segments, in particular second loops, that are arranged along the second application path and/or for the third path segments, in particular third loops, that are arranged along the third application path.

The thermoplastic filament and/or the second thermoplastic filament and/or the third thermoplastic filament may be parts of a common continuous thermoplastic filament. In certain embodiments, the continuous thermoplastic filament may form at least 100, in particular at least 1000, in particular at least 5000 path segments, in particular loops, and/or second path segments, in particular second loops, and/or third path segments, in particular third loops. The entire textile element may be formed of a single thermoplastic filament.

In some embodiments, the thermoplastic filament and/or the second thermoplastic filament and/or the third thermoplastic filament may have a length of at least at least 0.1 m, at least 1 m, at least 100 m, or at least 1000 m, or at least 1500 m. The thermoplastic filament and/or the second thermoplastic filament and/or the third thermoplastic filament may have a filament length of at most 10000 m, at most 5000 m, or at most 2500 m.

The loops and/or the second loops and/or the third loops may have any desired shape. For example, the loops and/or the second loops and/or the third loops may be round and particularly circular or oval, such as elliptic, or they can be polygonal. Preferably they are round. Partially superimposed loops are loops which are partially arranged on top of each other and thus partially overlap. However, the loops are not completely aligned with each other but offset to each other. In other words, the loops partially overlap with each other.

The thermoplastic filament and/or the second thermoplastic filament and/or the third thermoplastic filament may form a plurality of crossings along the application path and/or the second application path and/or third application path. At the crossings, the thermoplastic filament and/or the second thermoplastic filament and/or the third thermoplastic filament may contact each other and/or themselves, and may form a material-bonded, in particular fused, connection, in particular devoid of any additional, i.e. external adhesive.

In some embodiments, the textile element may have a filament crossing density of at least 100 crossings per cm², at least 200 crossings per cm², at least 300 crossing per cm², at least 400 crossings per cm², at least 500 crossings per cm², at least 600 crossings per cm², or at least 700 crossings per cm². The textile element may have a filament crossing density of less than 10000 crossings per cm², less than 5000 crossings per cm², or less than 3000 crossings per cm². Herein, the number of crossings may be derived from a microscopic image of the textile element.

If the path segments are embodied as loops, the second path segments as second loops and the third path segments as third loops, each loop and/or second loop and/or third loop except the first and last ones along the respective application path, may have a crossing number of at least 10, at least 20, at least 30, at least 50, at least 100, or at least 200. Herein, the "crossing number" is the number of crossings formed at different positions when staring at any crossing of the corresponding loop and counting the number of crossings formed by this loop with other loops until one comes back to the crossing of this loop at which one has started.

A higher crossing density can provide an increased stability, in particular tearing strength, as any occurring forces are well distributed over many crossings. Furthermore, forces can be efficiently transmitted through the textile element.

At the crossings, an upper filament section of the thermoplastic filament and/or the second thermoplastic filament and/or the third thermoplastic filament, which has been applied later, may at least partly be sunken into an underlying lower filament section of the thermoplastic filament and/or second thermoplastic filament and/or the third thermoplastic filament, which has been applied earlier.

The textile element may have a path segment density, in particular a loop density, of 0.5 to 15 path segments, in particular loops, per cm², 0.7 to 10 path segments, in particular loops, per cm², or 0.7 to 5 path segments, in particular loops, per cm². The textile element may have a second path segment density, in particular a second loop density, of 0.5 to 15 second path segments, in particular second loops, per cm², 0.7 to 10 second path segments, in particular second loops, per cm², or 0.7 to 5 second path segments, in particular second loops, per cm². The textile element may have a third path segment density, in particular a third loop density, of 0.5 to 15 third path segments, in particular third loops, per cm², 0.7 to 10 third path segments, in particular third loops, per cm², or 0.7 to 5 third path segments, in particular third loops, per cm². As used herein, the "path segment density", respectively the "loop density", may be the number of path segments, in particular of loops, being formed by the respective thermoplastic filament per cm². Herein, the respective path segment density, in particular the respective loop density, may be derived from a microscopic image of the textile element.

In case the path segments are loops, each loop formed by the thermoplastic filament may define a maximum clear distance of 5 mm to 50 mm, of 5 mm to 40 mm, or of 5 mm to 30 mm. Herein, the "maximum clear distance" may be the maximum length of a straight line extending through the center of the loop through the open area defined by the inner periphery of the thermoplastic filament forming the loop. If the loop is circular, for example, the maximum clearing distance is equal to the inner diameter of the loop. The same may be true for the second path segments being second loops and/or the third path segments being third loops.

A higher maximum clear distance can provide lower weight, higher flexibility, and/or increased breathability.

The thermoplastic filament and/or the second thermoplastic filament and/or the third thermoplastic filament may be provided as strands from an extruder and/or a spray head, wherein the plurality of path segments, in particular loops, and/or the plurality of second path segments, in particular second loops, and/or the plurality of third path segments, in particular third loops, may be formed by a relative movement and/or tilting of the extruder and/or spray head with respect to the shaping carrier, in particular the footwear last. The extruder and/or spray head may be fixed and the shaping carrier, in particular the footwear last, may be robotically moved in order to form the plurality of path segments, in particular loops, and/or the plurality of second path segments, in particular second loops and/or the plurality of third path segments, in particular third loops. However, the opposite arrangement and motion would also be conceivable.

The spray head may comprise a plurality of gas discharge nozzles for discharging a gas, in particular air, laterally from at least one filament discharge nozzle of the spray head for discharging the thermoplastic filament and/or the second thermoplastic filament and/or the third thermoplastic filament. The gas discharge nozzles may be, advantageously evenly, arranged around the at least one filament discharge nozzle and may be angled with respect to a discharge direction of the at least one filament discharge nozzle, in particular in order to form the ejected thermoplastic filament and/or the second thermoplastic filament and/or the third thermoplastic filament into a helix with increasing diameter as the distance from the spray head increases. In this case the application path and/or the second application path and/or the third application path is scanned by a relative movement of the spray head with respect to the shaping carrier, in particular the footwear last, whereas the path segments, in particular the loops, and/or the second path segments, in particular the second loops, and/or the third path segments, in particular the third loops, may be formed by the helical discharge of the thermoplastic filament and/or second thermoplastic filament and/or third thermoplastic filament from the at least one filament discharge nozzle. Herein, the spray head may be fixed and the shaping carrier, in particular the footwear last, may be robotically moved in order to drive along the application path and/or the second application path and/or the third application path. A spray head having gas discharges nozzles and a deposition method as disclosed herein are also described in WO 2022/069583 A1. Here again, the opposite arrangement and motion of spray head and shaping carrier would be conceivable, too.

In some embodiments, the molten thermoplastic filament and/or second thermoplastic filament and/or third thermoplastic filament may be ejected from the filament discharge nozzle with a velocity of at least 0.1 m/s, at least 0.5 m/s, or at least 0.7 m/s. The molten thermoplastic filament and/or second thermoplastic filament and/or third thermoplastic filament may be ejected from the filament discharge nozzle with a velocity of at most 10 m/s, at most 5 m/s, or at most 1 m/s.

The manufacturing system, which is configured to preferably automatically execute the method disclosed herein, may comprise a set of manufacturing units for manufacturing the textile element and in particular the textile footwear upper. The set of manufacturing units may comprise a control unit for controlling the execution of the method by controlling other manufacturing units of the set of manufacturing units. The control unit may, for example, comprise a processing unit and/or a memory unit containing computer-readable instructions that may be read and executed by the processing unit in order to implement the method.

The set of manufacturing units may further comprise at least one or all of the following manufacturing units: the spray head, the extruder, a gas supply unit, in particular an air supply unit for supplying gas, in particular air, to the gas discharge nozzles, a polymer supply unit for supplying a polymer composition to the extruder and/or to the filament discharge nozzle, a colorant, pigment and/or dye supply unit for supplying the coloring, pigment and/or dye to the extruder and/or to the filament discharge nozzle, a heating unit to heat the shaping carrier and/or the textile element and/or the sole unit, and/or a robotic handler for manipulating a relative position and/or orientation of the spray head and/or the heating unit with respect to the shaping carrier and/or any other physical entity as mentioned in the foregoing or in the following, in particular to modify, detect and/or evaluate the thermoplastic filament.

The set of manufacturing units may further comprise at least one or all of the following manufacturing units: a print head for applying at least one print onto the textile element and/or the sole unit, a plasma unit for plasma treating the textile element and/or the sole unit, in particular prior to printing, a curing unit for curing the textile element and/or the sole unit and/or the at least one print, a further robotic handler for manipulating a relative position and/or orientation of the print head and/or the plasma unit and/or the curing unit with respect to the shaping carrier and/or the textile element, a de-shaping unit for removing the textile element from the shaping carrier, in particular a de-lasting unit for removing the textile footwear upper and the shoe sole from the footwear last, and/or a packing unit for packaging the apparel in a sales and/or transport packaging.

Furthermore, the manufacturing system may comprise an enclosure housing at least some, preferably the majority and possibly all manufacturing units of the set of manufacturing units. The enclosure may house all manufacturing units of the set of manufacturing units apart from the de-shaping unit and/or packing unit. The enclosure can provide protection during manufacturing, not only for personnel, but for the process itself.

The manufacturing system may comprise a single manufacturing station having the set of manufacturing units, or may comprise a plurality of identical manufacturing stations, each having its own set of manufacturing units and possibly each having a dedicated enclosure, which allows easy scalability of production capacities by adding or removing manufacturing stations.

Additionally, the shaping carrier or a plurality of shaping carriers, in particular different shaping carriers for different apparel sizes and/or shapes, may be part of the manufacturing system as well.

The base element, in particular the base footwear upper, may be understood as a basic version of the textile element, in particular of the textile footwear upper. The basic version may lack any modifying and/or any second, third and/or further thermoplastic filament and/or any diversification regarding certain applications and/or wearers. For the step of applying the thermoplastic filament, thereby at least partially forming the textile element, one may also speak of at least partially forming the base element. A variety of different textile elements, in particular of different textile footwear uppers, may be derived from the same base element by modifying at least one application parameter in particular for a specific area of the textile element, by applying the second thermoplastic filament and possibly in addition the third thermoplastic filament. Herein, the base element may already be useable as part of an apparel, in particular as an upper for an article of footwear, in particular, however, without any specialization for a specific application and/or wearer. The second thermoplastic filament and possibly additionally the third thermoplastic filament may be applied onto the base element for deliberately creating at least one specific property in the at least one specific area, hereby further adapting the textile element for specific applications and/or for specific wearers.

The thermoplastic filament may be applied as to form a thermoplastic layer, and the second thermoplastic filament may be applied as to form a second thermoplastic layer above the thermoplastic layer, and the third thermoplastic filament may be applied as to form a third thermoplastic layer above the thermoplastic layer and/or the second thermoplastic layer.

Therein, the second thermoplastic layer may be fixed to the thermoplastic layer in the at least one specific area, whereby an advantageous strengthening and/or stiffening of the textile element, in particular the textile footwear upper, can be obtained. This effect can be further increased if sections of the second application path are additionally angled with respect to underlying sections of the application path in the at least one specific area.

The second thermoplastic layer may be fixed to the thermoplastic layer in or outside the at least one specific area by any applicable method, like, for example, glueing, stitching, fusing, etc. Advantageously, however, the second thermoplastic layer may be thermally bonded to the thermoplastic layer, preferably by applying the second thermoplastic filament onto the underlying thermoplastic filament by depositing the former in an at least partially molten and/or liquid state onto the latter, most preferably by discharging the second thermoplastic filament from the filament discharge nozzle of the spray head.

Alternatively, the second thermoplastic layer may be moveable relative to the thermoplastic layer in the at least one specific area. This may increase wear comfort and/or facilitate entry of a wearer, in particular in case of an article of footwear.

In some embodiments the second thermoplastic filament may at least partly be applied as a wadding in at least one specific area. In this way, an improved thermal insulation can be achieved. Furthermore, wear comfort can be increased, in particular in case of an article of footwear, as an advantageous padding can be provided.

Herein, a "wadding" may be understood as a structure in which the second thermoplastic filament is in a disordered state and may take up a higher volume compared to an ordered state of the second thermoplastic filament, where the thermoplastic filament may be present as the plurality of second path segments and in particular as the plurality of second loops. Such wadding may be obtained by an increased distance between the spray head and the shaping carrier during deposition of the second thermoplastic filament compared to a distance between the spray head and the shaping carrier while applying the second thermoplastic filament in the form of the plurality of second path segments, in particular of second loops, as described before. If the second thermoplastic filament is at least partly applied as a wadding, the third thermoplastic filament may cover the second thermoplastic filament so that the thermoplastic filament and the third thermoplastic filament may form a protective pocket for the second thermoplastic filament and/or the wadding.

The different or specific applications, in particular regarding the article of footwear and/or the textile footwear upper, may be different sports, like, for example, running, tennis, soccer, football, climbing, or athletics, and/or different activities, like, for example, walking, skating, or dancing, and/or leisure, where different properties in different sections of the apparel and/or footwear may be needed and/or may be advantageous. The terms "different wearers" or "specific wearers", in particular regarding the article of footwear and/or the textile footwear upper, may refer to different anatomies and/or different motional behaviors, in particular gaits, of different wearers and in particular not only to different apparel and/or footwear sizes.

The application path and/or the second application path and/or the third application path may at least partially be in the shape of a helix or a spiral, and/or meandering. If a footwear last is employed, an axial direction of the helix and a height direction of the footwear last may enclose an angle smaller than 30°, in particular smaller than 20° and preferably smaller than 10°.

It should be understood that although the wording "applying a thermoplastic filament onto a/the shaping carrier", "applying a second thermoplastic filament onto the base element" and/or "onto the thermoplastic filament" and "applying a third thermoplastic filament onto the base element", "onto the thermoplastic filament" and/or "onto the second thermoplastic filament" is used, this should not be construed as meaning that only one single layer of the thermoplastic filament and/or only one single layer of the second thermoplastic filament and/or only one single layer of the third thermoplastic filament is allowed on top of the respective underlying structure. In fact, several layers of the thermoplastic filament may be applied one on top of the other onto the shaping carrier. Correspondingly, several layers of the second thermoplastic filament and/or of the third thermoplastic filament may be applied one on top of the other onto the base element and/or the thermoplastic filament and/or the second thermoplastic filament. These layers may be fully or only partly overlapping.

If the thermoplastic filament is applied onto the shaping carrier with a maximum layer thickness of at most 0.5 mm, at most 0.25 mm, or at most 0.1 mm, in particular for forming the base element, material savings and a weight reduction can be achieved. Furthermore, a base element with advantageously high flexibility can be provided for enhanced design freedom regarding the textile element.

The thermoplastic filament and/or the second thermoplastic filament and/or the third thermoplastic filament may include any suitable thermoplastic polymer material and/or composition, for example polyester, polyamide, polyether block amide (PEBA), for example PEBAX^{®} (Arkema), thermoplastic polyurethane (TPU), ethylene vinyl acetate (EVA), polyolefin, such as polyethylene or polypropylene, or mixtures thereof.

Rheological additives that reduce viscosity (i.e., increase fluidity) may include plasticizers such as dioctyl phthalate (DOP), acetyl tributyl citrate (ATBC), and/or polyethylene glycol (PEG), which may act to lower the glass transition and melting temperatures of the polymer matrix. Additionally, reactive diluents and/or low-molecular-weight oligomers, such as polypropylene glycol, may be introduced to achieve similar effects. An increased fluidity may lead to a wider diameter or form of the thermoplastic filament applied to the shaping carrier.

Conversely, rheological additives that increase viscosity (i.e., decrease fluidity; also called thickener) may include viscosity modifiers such as fumed silica, organo-clay thixotropes, and/or high-molecular-weight rheology agents like polymethyl methacrylate (PMMA) and/or ultra-high-molecular-weight polyethylene (UHMWPE). These additives may increase the structural integrity of the molten filament during discharge, reducing sagging and/or spreading upon deposition.

In addition, the thermoplastic filament and/or the second thermoplastic filament and/or the third thermoplastic filament may contain one or more additives, like pigments, foaming agents, cross-linking agents, etc.

If the thermoplastic filament and the second thermoplastic filament and/or the third thermoplastic filament are made from the same material, the method for manufacturing can advantageously be simplified. Additionally, storage requirements can be decreased as less material has to be stocked.

The term "same material" may be understood to mean exactly the same material composition or a similar material composition taking tolerances into account.

Alternatively, the thermoplastic filament and/or the second thermoplastic filament and/or the third thermoplastic filament may be made from different materials. Thus, design freedom can be increased and/or more complex designs can be enabled.

In some embodiments of the invention the thermoplastic filament, the second thermoplastic filament and possibly also the third thermoplastic filament may be parts of a common continuous thermoplastic filament. Hereby, a fast, reliable, transparent and/or traceable application of the thermoplastic filament and the second thermoplastic filament can be ensured.

The sole unit may comprise a midsole and an outsole, and possibly an insole, too. The midsole may be made from any suitable material, in particular a thermoplastic polymer, like, for example polyester, polyamide, polyether block amide (PEBA), for example PEBAX^{®} (Arkema), thermoplastic polyurethane (TPU), ethylene vinyl acetate (EVA), polyolefin, such as polyethylene or polypropylene, or mixtures thereof. The outsole may be made from any suitable material, for example natural or synthetic rubber, or from a thermoplastic polymer, like, for example, a thermoplastic polyurethane (TPU). The midsole and/or the outsole may be molded, 3D-printed, or manufactured using any other applicable method. The midsole may, in particular additionally, be foamed.

One preferred material combination may be PEBAX^{®} (Arkema) for the midsole and thermoplastic polyurethane (TPU), such as Desmopan^{®} 2790A or Desmopan^{®} 9392A (Covestro), for the thermoplastic filament and possibly the second thermoplastic filament and/or the third thermoplastic filament. A synthetic rubber may be preferred for the outsole.

When manufacturing the midsole, softened PEBAX^{®} (Arkema) may be injection-molded and foamed. Alternatively, PEBAX^{®} (Arkema) may be 3D-printed and possibly then foamed to form the midsole. The midsole may afterwards be attached to the footwear last. The rubber outsole may be attached to the midsole by glueing or any other applicable method, in particular before or after attaching the midsole to the footwear last. Finally, the thermoplastic filament and possibly the second thermoplastic filament and/or the third thermoplastic filament, all made from the same thermoplastic polyurethane (TPU), may be applied to the footwear last to form the textile footwear upper, as described herein. The midsole may be connected to the textile footwear upper by applying the thermoplastic filament and possibly the second thermoplastic filament and/or the third thermoplastic filament also partly onto the midsole.

Alternatively, the textile footwear upper may be formed by applying the thermoplastic filament and possibly the second thermoplastic filament and/or the third thermoplastic filament, being all made from the same thermoplastic polyurethane (TPU), first, whereupon softened PEBAX^{®} (Arkema) may be directly injection-molded or 3D-printed to an underside of the textile footwear upper, and may afterwards possibly be foamed, to form the midsole. Finally, the rubber outsole may be fastened to an underside of the midsole by any applicable method, for example glueing.

For increased recyclability, the thermoplastic filament and possibly the second thermoplastic filament and/or the third thermoplastic filament and the sole unit, in particular the midsole, the outsole, and possibly the insole, may all be made from the same material or the same material composition, or at least from chemically similar materials or chemically similar material compositions, like, for example, thermoplastic polyurethane (TPU).

If the textile element is a textile footwear upper, the at least one specific area may comprise an outer side section, an instep section, a heel section, a toe section, and/or an ankle section. Through this, specific and/or critical sections of a wearer's foot may be advantageously addressed by providing specific properties in these sections.

The at least one specific area may form a closed patch on the base element and/or the thermoplastic filament and/or the second thermoplastic filament and/or the third thermoplastic filament. Herein, the at least one specific area and/or patch may be in any conceivable shape, in particular depending on the intended purpose and/or wearer. The at least one specific area and/or patch may, for example, be oblong or may comprise convex and concave outer contour sections. Furthermore, the at least one specific area may be an area that completely encloses at least one region that remains uncovered by the thermoplastic filament and/or the second thermoplastic filament and/or the third thermoplastic filament. In particular, the at least one specific area may enclose, for example, a foot entry portion of the textile footwear upper, in particular like a collar.

The at least one specific property may comprise a strengthening and/or stiffening. Thus, specific areas of the apparel, in particular the article of footwear, can be strengthened and/or stiffened for meeting specific demands.

The strengthening and/or stiffening in the at least one specific area may be achieved by applying the thermoplastic filament and/or the second thermoplastic filament and/or the third thermoplastic filament specifically in that area, in the latter two cases in particular as the plurality of second path segments, in particular second loops, and/or third path segments, in particular third loops. The strengthening and/or stiffening may furthermore be achieved by fixing the thermoplastic layer and the second thermoplastic layer to each other in the at least one specific area. Further still, the application speed for applying the thermoplastic filament and/or the second thermoplastic filament and/or the third thermoplastic filament may be lowered in the at least one specific area in order to increase deposition density and therefore strength and/or stiffness. Alternatively, or additionally, sections of the second application path may be angled with respect to sections of the first application path and/or sections of the third application path in the at least one specific area. Furthermore, the thermoplastic filament and/or the second thermoplastic filament and/or the third thermoplastic filament may be applied in the at least one specific area with a higher layer thickness and/or by deliberately choosing a specific course of the respective application path in the at least one area in order to increase strength and/or stiffness.

If the textile element is a textile footwear upper, in particular for a tennis shoe, a soccer shoe, a football shoe, etc., the outer side section may be stiffened and/or strengthened in order to better absorb lateral forces when changing directions. Furthermore, the toe section and/or the ankle section may be strengthened and/or stiffened to protect the wearer's toes, for example for climbing shoes, and/or ankle, in particular for hiking shoes. Further still, strengthening and/or stiffening of the instep section may be contemplated.

If the textile element is part of a glove, for example, a palm section and/or a wrist section may be strengthened and/or stiffened, in particular for biking and/or fitness gloves or ski and/or snowboard gloves. If the textile element is part of a backpack, a spine section may be strengthened and/or stiffened for better force introduction. Furthermore, strengthening and/or stiffening in certain sections may also be contemplated for garments like shirts or pants.

The at least one specific property may comprise a cushioning. Thus, specific areas of the apparel, in particular the article of footwear, can be cushioned for meeting specific demands.

The cushioning in the at least one specific area may be achieved by applying the thermoplastic filament and/or the second thermoplastic filament and/or the third thermoplastic filament specifically in that area, in the latter two cases in particular as a wadding. Furthermore, the application speed for applying the thermoplastic filament and/or the second thermoplastic filament and/or the third thermoplastic filament may be increased in the at least one specific area in order to decrease deposition density and therefore provide softness and/or flexibility. Furthermore, the thermoplastic filament and/or the second thermoplastic filament and/or the third thermoplastic filament may be applied in the at least one specific area with a higher layer thickness and/or by deliberately choosing a specific course of the respective application path in the at least one area in order to provide cushioning. For example, a separation distance between neighboring application paths of the thermoplastic filament and/or between neighboring second application paths of the second thermoplastic filament and/or between neighboring third application paths of the third thermoplastic filament may be increased in the at least one specific area.

If the textile element is a textile footwear upper, in particular the heel section may be cushioned in order to increase the wearer's comfort. Regarding running and in particular marathon shoes, an instep section may alternatively or additionally be cushioned. For hiking shoes cushioning of the ankle section may be contemplated.

In case of a glove, for example, a palm section may be cushioned, in particular for biking and/or fitness gloves or ski and/or snowboard gloves. If the textile element is part of a backpack, a spine section may be cushioned for increased wearing comfort. The textile element may also be part of cycling pants, whose seat section may be cushioned.

The at least one specific property may comprise a protective plating. Through this, specific areas of the apparel, in particular of the article of footwear, may exhibit additional protection, in particular not only for the wearer but also for parts of the apparel and in particular for parts of the textile element which are located under the protective plating.

The protective plating may be achieved in the at least one specific area by applying the thermoplastic filament and/or the second thermoplastic filament and/or the third thermoplastic filament specifically in that area, in the latter two cases in particular as the plurality of second path segments, in particular second loops, and/or third path segments, in particular third loops. The protective plating may be characterized by a very dense deposition of the thermoplastic filament and/or the second thermoplastic filament and/or the third thermoplastic filament, in particular with relatively small and/or highly superimposed loops and/or second loops and/or third loops. This may be achieved by lowering the application speed for applying the thermoplastic filament and/or the second thermoplastic filament and/or the third thermoplastic filament in the at least one specific area. Thus, the protective plating may be watertight or at least essentially watertight. The protective plating may furthermore be achieved by fixing the thermoplastic layer and the second thermoplastic layer to each other in the at least one specific area. Alternatively, or additionally, sections of the second application path may be angled with respect to sections of the first application path and/or sections of the third application path in the at least one specific area. Furthermore, the thermoplastic filament and/or the second thermoplastic filament and/or the third thermoplastic filament may be applied in the at least one specific area with a higher layer thickness and/or by deliberately choosing a specific course of the respective application path in the at least one area in order to provide protective plating.

If the textile element is a textile footwear upper, in particular for a tennis shoe, a soccer shoe, a football shoe, etc., the outer side section may be plated in order to better protect this section of the textile footwear upper and/or the corresponding section of a wearer's foot. Furthermore, the toe section may be plated to protect the wearer's toes, for example for climbing shoes and/or hiking shoes and/or soccer or football shoes. Further still, protective plating of the instep section may be contemplated, in particular for soccer or football shoes.

If the textile element is part of a glove, for example, a palm section, a back of hand section and/or a wrist section may be furnished with a protective plating, in particular for winter sports. If the textile element is part of a backpack, a plating may be foreseen at its lower part in order to protect this section, possibly also against moisture or water ingress, when the backpack is standing on the ground. Furthermore, protective plating may also be contemplated for garments, for example in knee sections of a pair of trousers.

The at least one specific property may comprise a higher flexibility and/or breathability. Thus, wearing comfort and/or performance of the apparel, in particular the article of footwear, can be increased. Furthermore, in case of an article of footwear entry can be facilitated.

Flexibility and/or breathability in the at least one specific area may be increased by keeping that area free from the second thermoplastic filament and/or the third thermoplastic filament, and/or by providing a thinner layer of the thermoplastic material. A thinner layer may be achieved by modifying, for example, to an increased opening degree of the filament discharge nozzle, to an increased distance between the at least one filament discharge nozzle and the shaping carrier, to an increased movement speed of the at least one filament discharge nozzle relative to the shaping carrier, to a more breathable composition of the thermoplastic filament and/or to a reduced filament flow rate.

For increased flexibility and/or breathability, the application speed for applying the thermoplastic filament and/or the second thermoplastic filament and/or the third thermoplastic filament may be increased in the at least one specific area in order to decrease deposition density and therefore provide increased flexibility and/or breathability. Further still, the thermoplastic filament and/or the second thermoplastic filament and/or the third thermoplastic filament may be applied in the at least one specific area with a lower layer thickness and/or by deliberately choosing a specific course of the respective application path in the at least one area in order to provide increased flexibility and/or breathability. For example, a separation distance between neighboring sections of the application path and/or between neighboring second sections of the second application path and/or between neighboring third sections of the third application path may be increased in the at least one specific area.

If the textile element is a textile footwear upper, the instep section, the ankle section, and/or the heel section may have increased flexibility in order to increase the wearer's comfort and/or to facilitate entry of a wearer's foot. Regarding running shoes, in particular marathon shoes and/or athletics shoes, specific sections of the textile footwear upper may be provided with increased flexibility to improve performance.

In case of a glove, for example, a wrist section may exhibit increased flexibility to facilitate entry of a wearer's hand. Furthermore, a finger section of a glove may be made more flexible in order to increase a wearer's motoric sensitivity. If the textile element is part of a backpack, for example, specific sections may have increased flexibility in order to allow easier loading of the backpack. The textile element may also be part of garments which may have increased flexibility in certain areas to increase wearing comfort and/or fit.

The at least one specific property may comprise an aesthetic effect. Through this, an advantageously high design flexibility can be achieved. Different design features can easily be implemented, in particular by changing the application path and/or the second application path and/or the third application path, preferably with respect to each other, too. Furthermore, diversification can be facilitated, for example, by including the second thermoplastic filament as wadding in a specific area for a first type of footwear and by applying the second thermoplastic filament as a plurality of partially superimposed second loops in a corresponding area for a second type of footwear.

The at least one specific property may comprise an entrance enhancement. Thus, entrance of a wearer, in particular of a wearer's foot into the article of footwear, can be facilitated.

Various measures may be employed to provide entrance enhancement. For example, as already outlined, flexibility of the textile element may be increased in the at least one specific area. Furthermore, application of the second thermoplastic filament and/or the third thermoplastic filament as wadding may be envisaged. Further still, the thermoplastic filament may be applied as to form a thermoplastic layer, and the second thermoplastic filament may be applied as to form a second thermoplastic layer above the thermoplastic layer, and the second thermoplastic layer may be moveable relative to the thermoplastic layer in the at least one specific area in order to facilitate entry of a wearer in the vicinity of or next to the specific area.

In some embodiments a flap and/or tongue may be shaped while applying the thermoplastic filament and/or the second thermoplastic filament and/or the third thermoplastic filament onto the shaping carrier. Thus, advantageous properties regarding the entry of a wearer into the apparel, in particular of a wearer's foot into the article of footwear, can be obtained, in particular if the flap and/or tongue may be grabbed by a person during entry of the person's foot.

Herein, the flap and/or tongue may be a freestanding element of the apparel. In case of an article of footwear, the flap and/or tongue may be located at an instep section or a heel section of the article of footwear.

In some embodiments of the invention a collar of a textile footwear upper may be shaped such as to facilitate entry of a wearer's foot.

The application path and/or the second application path and/or the third application path may be lowered at the collar in order to facilitate entry. Alternatively, or additionally, a specific application of the thermoplastic filament and/or the second thermoplastic filament and/or the third thermoplastic filament may yield specific properties, like increased flexibility, at the collar in order to facilitate entry. This may be achieved, for example, by increasing the application speed for applying the thermoplastic filament and/or the second thermoplastic filament and/or the third the thermoplastic filament.

The specific properties and their application in specific areas of certain pieces of apparel listed herein are to be understood as merely exemplary. The skilled person will understand that other specific properties may be contemplated at other specific areas for certain pieces of apparel.

Furthermore, it should be understood that although the claim language refers to "at least one specific property" in "at least one specific area" this does encompass that several specific properties may be present in one specific area, and also that one or more specific properties may exist in a first specific area and one or more specific properties in a second specific area.

As said, the invention also relates to a textile element, in particular a textile footwear upper, manufactured by a method as set out in the foregoing.

As said, the invention also relates to an article of footwear, in particular a sports and/or leisure shoe, the method comprising a textile element as set out in the foregoing which forms a textile footwear upper, and a sole unit which is connected to the textile footwear upper.

As said, the invention also relates to a manufacturing system for manufacturing a textile element, in particular a textile footwear upper, preferably as set out in the foregoing, the manufacturing system being configured to execute a method as set out in the foregoing. The manufacturing system may comprise the textile output unit as set out in the foregoing.

The methods, elements and articles disclosed herein are not intended to be limited to the application and embodiment described above. In particular, they may have a number of individual elements, components and units as well as process steps deviating from a number specified herein in order to fulfill a mode of operation described herein. In addition, in the case of value ranges specified in this disclosure, values lying within the specified limits are also to be regarded as disclosed.

In particular, it is pointed out that all features, properties and methods described in relation to an element, or an article are transferable mutatis mutandis to methods and can be used in the sense of the invention and are deemed to be co-disclosed. The same applies in the opposite direction. This means that structural features mentioned in relation to methods can also be taken into account and claimed within the scope of device claims and can also be counted as part of the disclosure.

In the following, the present invention is described by way of example with reference to the accompanying figures. The drawing, the description and the claims contain numerous features in combination. The skilled person will also usefully consider the features individually and use them sensibly in combination in the context of the claims.

If there is more than one example of a particular object, only one of them may be provided with a reference sign in the figures and in the description. The description of this specimen can be transferred accordingly to the other specimens of the object. If objects are named in particular by means of numerical words, such as first, second, third object, etc., these are used to name and/or assign objects. Accordingly, for example, a first object and a third object, but no second object, can be included. However, a number and/or sequence of objects could also be derived from numerical words.

### Brief description of the drawings

Embodiments of the present disclosure will now be described by way of example only and with reference to the following accompanying drawings.
Figure 1 schematically shows an article of footwear in a three-dimensional view; the article of footwear being based on a base footwear upper.
Figure 2 schematically depicts an alternative article of footwear in a three-dimensional view; the alternative article of footwear being based on the same base footwear upper as the article of footwear of figure 1.
Figure 3 contains a schematic view of a part of a manufacturing system for manufacturing the articles of footwear of figures 1 and 2.
Figure 4 shows a schematic flow diagram of a method for manufacturing different articles of footwear which are based on the same base footwear upper.
Figure 5 depicts a three-dimensional schematic of the partly finished base footwear upper in the process of being formed on a footwear last.
Figure 6 shows a three-dimensional schematic of the partly finished base footwear upper in the process of being formed on the footwear last, wherein at least one application parameter is modified in a specific area.
Figure 7 contains an enlarged view of the base footwear upper of figure 5 or 6.
Figure 8 depicts a three-dimensional schematic of the article of footwear of figure 1, wherein a second thermoplastic filament is applied to a specific area.
Figure 9 shows an enlarged view of a part of the specific area.
Figure 10 contains a three-dimensional schematic of an alternative step of applying a second thermoplastic filament to a further specific area of the base footwear upper of figure 5.
Figure 11 shows a three-dimensional schematic of a further step following the step of figure 10 to obtain the article of footwear of figure 2 having specific properties in a specific area.
Figure 12 depicts a three-dimensional schematic of the base footwear upper indicating specific areas as possible targets for applying specific properties.
Figure 13 schematically shows a further alternative article of footwear in a three-dimensional view; the further alternative article of footwear being based on the same base footwear upper as the articles of footwear of figures 1 and 2.
Figure 14 presents an alternative base footwear upper, which may be used as a common base for a different line of articles of footwear, in a schematic three-dimensional view.
Figure 15 schematically shows a further alternative article of footwear in a three-dimensional view formed by use of a modified filament electrostatic property.
Figure 16 depicts a three-dimensional schematic of the textile footwear upper of figure 1 with a modified color in a specific area.
Figure 17 shows a three-dimensional schematic of the partly finished base footwear upper in the process of being formed on the footwear last, wherein a further application parameter is modified in a specific area.

### Detailed Description

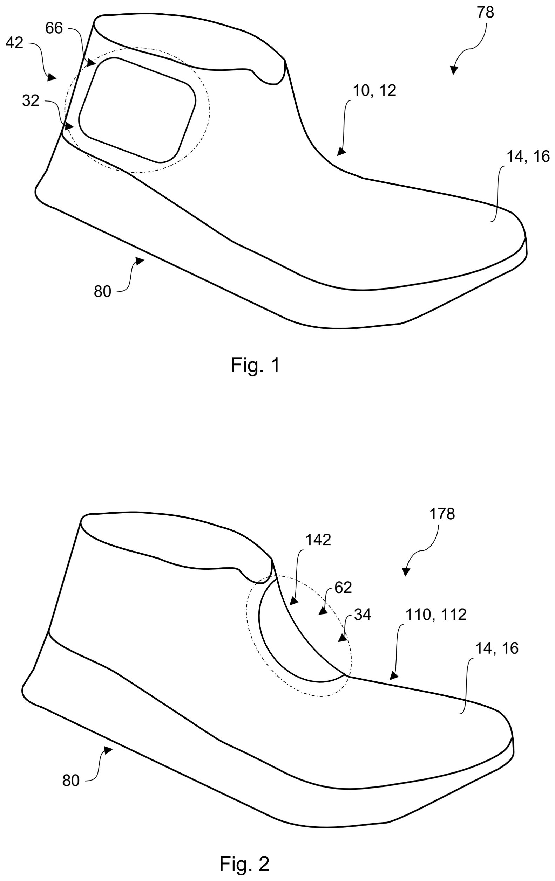

Figure 1 shows a piece of apparel, in this case an article of footwear 78 in a schematic three-dimensional view. The article of footwear 78 is a sports shoe and comprises a textile element 10 which forms a textile footwear upper 12 and a sole unit 80 which is connected to the textile footwear upper 12.

As is known in the art, the sole unit 80 may be formed by several stacked sole elements, for example a midsole, an outsole and possibly also an insole (not shown). The midsole may be made from any suitable material, in particular a thermoplastic polymer, like, for example polyester, polyamide, polyether block amide (PEBA), for example PEBAX^{®} (Arkema), thermoplastic polyurethane (TPU), ethylene vinyl acetate (EVA), polyolefin, such as polyethylene or polypropylene, or mixtures thereof. The outsole may be made from any suitable material, for example natural or synthetic rubber, or from a thermoplastic polymer, like, for example, a thermoplastic polyurethane (TPU). The midsole and/or the outsole may be molded, 3D-printed, or manufactured using any other applicable method. The midsole may, in particular additionally, be foamed.

Figure 2 shows another article of footwear 178 in a schematic three-dimensional view. The article of footwear 178 is a leisure shoe and comprises a textile element 110 which forms a textile footwear upper 112 and a sole unit 80 which is connected to the textile footwear upper 112. The sole unit 80 of the article of footwear 178 of figure 2 is identical to the sole unit 80 of the article of footwear 78 of figure 1.

The article of footwear 78 of figure 1 and the article of footwear 178 of figure 2 are made using the same type of sole unit 80 and the same type of base element 14, which forms a common base footwear upper 16. Diversification for different applications and/or wearers may be achieved by adding diversification structures 42, 142 to the common base footwear upper 16. However, the diversification structures 42, 142 may be omitted.

In the exemplary embodiment of figure 1, the diversification structure 42 of the article of footwear 78 is a strengthening, stiffening and protective plating applied to the base footwear upper 16 in a specific area 32, namely at a heel section 66. The diversification structure 142 of the article of footwear 178 is in this example a cushioning and thermal insulation applied to the base footwear upper 16 in a specific area 34, namely at an instep section 62. Both diversification structures 42, 142 yield distinctive aesthetic effects, too.

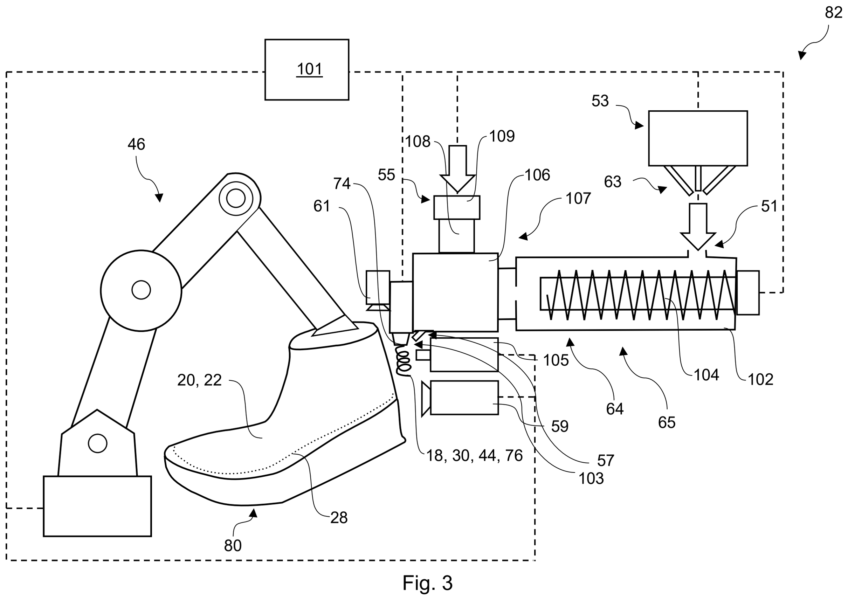

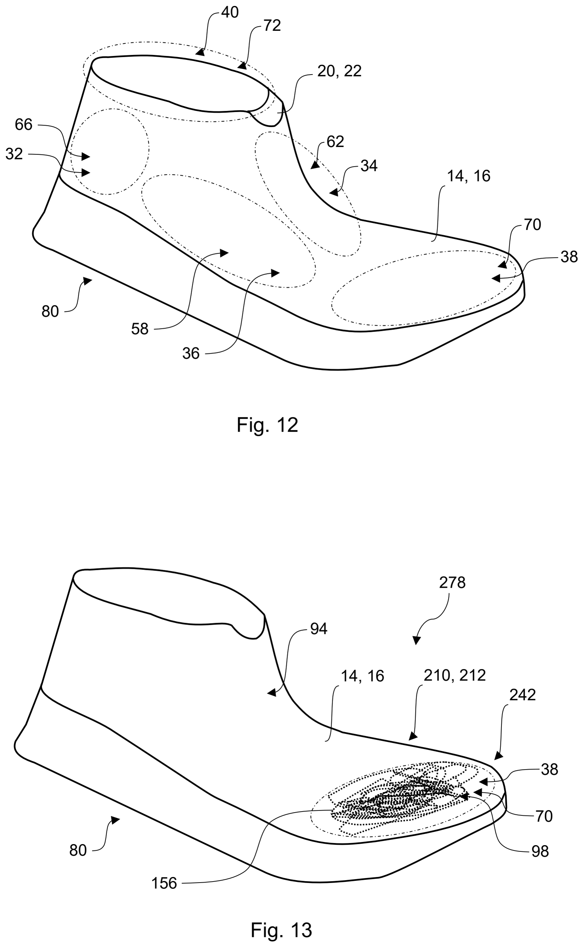

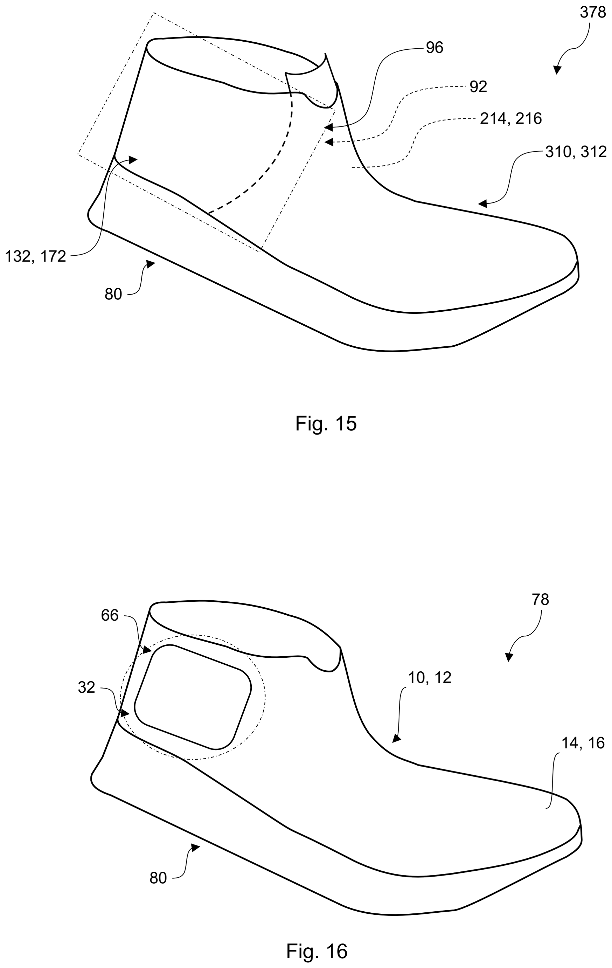

Figure 3 contains a schematic view of a part of a manufacturing system 82 for manufacturing the articles of footwear 78, 178 and in particular for manufacturing their textile footwear uppers 12, 112. Both articles of footwear 78, 178 and in fact a whole variety of different articles of footwear, for example also the articles of footwear 278, 378 shown in figures 13 and 15, can be manufactured by the manufacturing system 82.

The manufacturing system 82 comprises and/or utilizes a plurality of different shaping carriers, embodied as footwear lasts, for shaping different textile elements, embodied as textile footwear uppers. The footwear lasts are available for different footwear types and/or sizes. Among this plurality is a footwear last 22 for forming the textile footwear uppers 12, 112, and in particular the base footwear upper 16, thereon. The sole unit 80 may be affixed to an underside of the footwear last 22.

The manufacturing system 82 comprises a textile output unit 64 to apply the textile footwear uppers 12, 112, and in particular the base footwear upper 16, onto the footwear last 22. In operation, the textile output unit 64 provides thermoplastic filaments, in particular a thermoplastic filament 18, an optional second thermoplastic filament 30, and an optional third thermoplastic filament 44, as described later, for depositing these on the footwear last 22 and/or on already existing layers of material on the footwear last 22. The thermoplastic filament 18 and/or the second thermoplastic filament 30 and/or the third thermoplastic filament 44 may be part of a continuous thermoplastic filament 76 supplied by the textile output unit 64.

The textile output unit 64 comprises a dosing unit 107, a melting unit 65 and a filament discharge unit 103 having at least one filament discharge nozzle 74, which may have a modifiable opening degree.

The melting unit 65 is configured to melt a polymer composition, in particular the thermoplastic material, used for the thermoplastic filament 18, 30, 44, 76, which is then ejected via the filament discharge nozzle 74. The melting unit 65 comprises an extruder having a barrel 102 and a screw 104 which is arranged in the barrel 102. For melting the polymer composition, the melting unit 65 comprises a material heating unit (not shown). The melting unit 65 comprises at least one filling opening 51 for filling the polymer composition for the thermoplastic filament 18 into the barrel 102. The melting unit 65 may further comprise a further filling opening (not shown) for adding one or more additives to the polymer composition. At at least one of the filling openings 51, at least one input dosing unit 53 may be provided for automatic, precise and reproducible addition of the one or more additives to the polymer composition. In the present example, the input dosing unit 53 is provided at the filling opening 51 and comprises exemplarily three input discharge nozzles 63 for discharging the one or more additives to the polymer composition. The polymer composition inside the textile output unit 64, in particular inside the melting unit 65, may also be called polymer material and/or thermoplastic material.

The textile output unit 64 may comprise at least one further dosing unit, at least one further melting unit and at least one further filament discharge unit for a respective further color of the thermoplastic filament 18, and/or of the second thermoplastic filament 30 and/or the third thermoplastic filament 44, which may be designed like the dosing unit 107, the melting unit 65 and the filament discharge unit 103.

The polymer composition may include any suitable thermoplastic polymer material and/or composition, for example polyester, polyamide, polyether block amide (PEBA), for example PEBAX^{®} (Arkema), thermoplastic polyurethane (TPU), in particular as Desmopan^{®} 2790A or Desmopan^{®} 9392A (Covestro), ethylene vinyl acetate (EVA), polyolefin, such as polyethylene or polypropylene, or mixtures thereof. In addition, the polymer composition may contain one or more additives, like colorants, pigments, dyes, foaming agents, cross-linking agents, rheological additives for modifying the viscosity of the polymer composition etc.

Colorants may comprise materials such as masterbatch pellets or concentrates formulated with preferably thermally stable chromophores suitable for integration into molten polymer material. For example, a polyethylene-based masterbatch containing phthalocyanine blue may be introduced into a molten polypropylene polymer composition to achieve a deep blue coloration.

Pigments may include inorganic or organic particulate compounds that impart color through dispersion within the polymer matrix. Suitable example pigments include titanium dioxide (white), carbon black (black), and/or iron oxide red (rust-red), which may be blended with the polymer composition to yield opaque or semi-opaque filament colors.

Dyes may encompass soluble colorant molecules capable of dissolving in the molten polymer composition and imparting a uniform hue upon solidification. Examples of suitable dyes include Solvent Red 135, Disperse Blue 56, and/or Anthraquinone-based yellow dyes, depending on the desired filament coloration and/or compatibility with the thermoplastic resin.

The filament discharge nozzle 74 is configured to dispense and/or discharge the molten polymer composition. The filament discharge nozzle 74 has a variable opening degree. Depending on the opening degree, shear on the thermoplastic filament 18 during spraying can be varied. The dosing unit 107 comprises a pump 108, a pump drive 109 to drive the pump 108, a dosing head 106 and an optional additive input 55. The pump 108 generates pressure for dispensing the molten polymer composition as the thermoplastic filaments 18, 30, 44, 76 through the filament discharge nozzle 74. The pump 108 is configured to control, in particular fine tune, the output pressure of the molten polymer composition through the filament discharge nozzle 74. The optional additive input 55 allows adding one or more additives into the thermoplastic filament 18 close to the filament discharge nozzle 74. Due to the addition of the one or more additives close to the filament discharge nozzle 74, rapid switching between different additives can be achieved. Superior mixing of the additive with the thermoplastic material may be achieved when inputting the additive at the filling opening 51.

The filament discharge unit 103 may comprise a plurality of gas outlet openings such as the exemplary gas discharge nozzle 57, through which a flow of gas, in particular compressed air, is ejected. In addition or alternatively, the plurality of gas outlet openings such as the exemplary gas discharge nozzle 57 may be provided by the filament treatment unit 105, which will be explained in the following. The flow of gas ejected by the gas outlet openings is used to influence the thermoplastic filaments 18, 30, 44, 76 emerging from the filament discharge nozzle 74 to form a helical shape. The textile output unit 64 and the method of forming the helical shaped filaments 18, 30, 44, 76 is disclosed in more detail in WO 2022/069583 A1. The gas discharge nozzle 57 may have a modifiable nozzle size for modifying a gas stream size of the gas when being discharged from the at least one gas discharge nozzle 57. Furthermore, the gas discharge nozzle 57 may have a modifiable nozzle direction for modifying a gas stream direction. The gas discharged by the gas discharged nozzle 57 may be heated and/or cooled. Therefore, the textile output unit 64 may comprise a gas heater and/or a gas cooler (not shown).

The manufacturing system 82 comprises a handling unit 46 to control an application path 28 of the thermoplastic filament 18, an optional second application path 54 of the optional second thermoplastic filament 30 and an optional third application path 68 of the optional third thermoplastic filament 44 when applying the respective thermoplastic filament 18, 30, 44 onto the footwear last 22 and/or onto already existing layers of material on the footwear last 22 (in figure 3 only part of the application path 28 is depicted as an example).

The handling unit 46 is configured to generate a relative movement of the footwear last 22 relative to the filament discharge unit 103 and in particular the filament discharge nozzle 74. The handling unit 46 is connected to the footwear last 22 to create the relative movement during application of the thermoplastic filaments 18, 30, 44, 76 onto the footwear last 22 and/or onto already existing layers of material on the footwear last 22. The handling unit 46 is configured to move the footwear last 22 relative to the stationary filament discharge unit 103. The handling unit 46 may also be configured to move the footwear last 22 during the manufacturing process between different manufacturing units of the manufacturing system 82 (not shown), the textile output unit 64 being one such manufacturing unit.

The handling unit 46 is embodied as a robot, in particular with a robotic arm having six degrees of freedom. The connection between the handling unit 46 and the footwear last 22 may be detachable so that the handling unit 46 may be connected with other footwear lasts, too.

In an alternative embodiment, the handling unit 46 may be configured to move the filament discharge unit 103 relative to the stationary footwear last 22. It would also be conceivable to move both, the filament discharge unit 103 and the footwear last 22, by respective handling units 46 during processing.

The manufacturing system 82 optionally comprises a treatment unit 105 for treating the sole unit 80 and/or the footwear last 22 and/or the thermoplastic filaments 18, 30, 44, 76 prior and/or while applying the thermoplastic filaments 18, 30, 44, 76. For example, the filament treatment unit 105 may be configured to apply heat and/or cold, to apply an airstream, to apply an electrostatic treatment and/or to apply one or more of the additives, in particular to one of the thermoplastic filaments 18, 30, 44, 76.

The manufacturing system 82 optionally comprises a detection unit 59 for detecting at least one of the thermoplastic filaments 18, 30, 44, 76 between the textile output unit 64 and the shaping carrier 20. Optionally, the detection unit 59 is for detecting at least one of the thermoplastic filaments 18, 30, 44, 76 after discharge of the filament discharge nozzle 74.

The manufacturing system 82 comprises a control unit 101, which is configured to control operation of at least the handling unit 46 and the textile output unit 64, in particular the melting unit 65, including the supply of the polymer composition, the pump drive 109, the filament discharge unit 103, the filament treatment unit 105. Furthermore, the control unit 101 may be configured to receive data from the detection unit 59 and/or control operation of the detection unit 59.

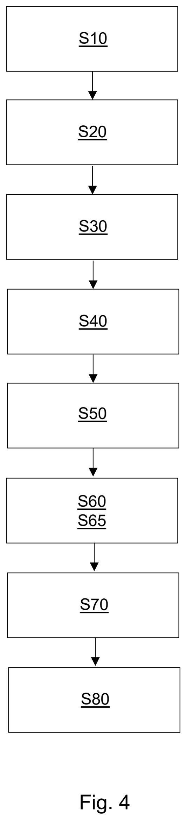

Figure 4 depicts a schematic flow diagram of a method for manufacturing different articles of footwear including the aforementioned articles of footwear 78, 178, and in particular their textile elements 10, 110, i.e. their textile footwear uppers 12, 112. The method is implemented by the manufacturing system 82, which is appropriately controlled by its control unit 101 to go through the steps of the method. It should be understood that the steps shown in figure 4 may be performed in a different order and/or may be performed at least parallel to each other.

In step S10 the sole unit 80 is provided. Insofar as only the textile element 10, 110 is manufactured, step S10 may be omitted. The sole unit 80 may be available as a finished part, in particular supplied by a third party, and thus made available to the manufacturing system 82. According to an option, however, the sole unit 80 is manufactured by the manufacturing system 82 in step S10 (not shown). Herein, the midsole of the sole unit 80 may be injection-molded and possibly foamed afterwards, in particular using a physical and/or chemical blowing agent. Preferably, the midsole is directly injection-molded onto the outsole of the sole unit 80, wherein the finished outsole may be provided as an inlay in a mold before injecting a polymer mixture for creating the midsole into the mold. The outsole may be injection-molded, too.

In step S20 an appropriate footwear last 22 is chosen from the plurality of available footwear lasts, the decision being in particular based on the type of footwear and/or on the footwear size to be produced. Afterwards, the chosen footwear last 22 is picked up by the handling unit 46. The sole unit 80 is fixed to the underside of the footwear last 22 by any appropriate means. Preferably, the sole unit 80 is fixed to the underside of the footwear last 22 by a switchable holding unit, for example by a magnetic holding unit or by a vacuum holding unit. In step S20 the footwear last 22 and/or the sole unit 80 may be pre-treated, in particular pre-heated, preferably by the direct heat unit 105. Afterwards the footwear last 22 together with the affixed sole unit 80 is moved to a vicinity of the filament discharge unit 103 by the handling unit 46.

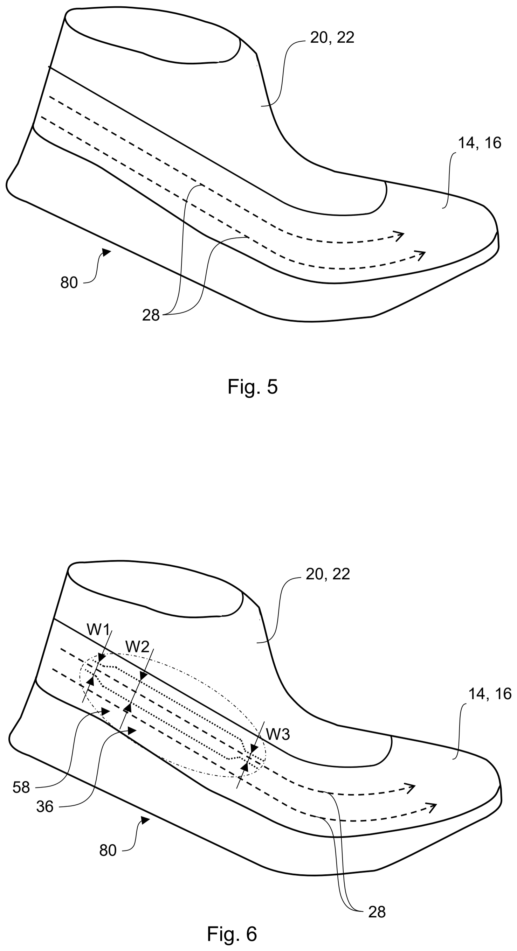

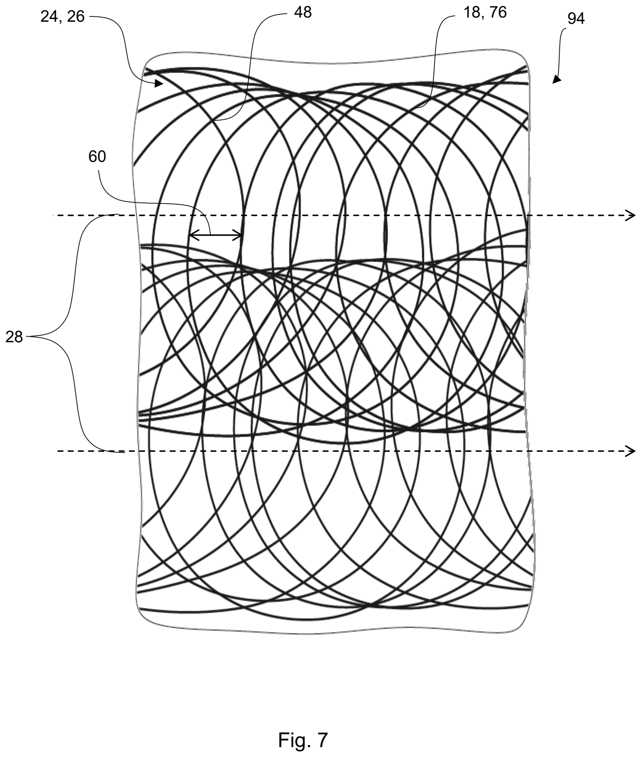

In step S30 the base footwear upper 16 is created by applying the thermoplastic filament 18 onto the footwear last 22 along the application path 28. This is further depicted in figures 5 and 7, where figure 5 shows a three-dimensional schematic of the partly finished base footwear upper 16 in the process of being formed on the footwear last 22, and figure 7 an enlarged view of a finished part of the base footwear upper 16.

The base footwear upper 16 is created by applying the thermoplastic filament 18 onto the footwear last 22 to form a plurality of path segments 24 in the form of loops 26 on the footwear last 22 along an application path 28 (cf. figure 7). With reference to figures 3 and 5, the application path 28 is preferably scanned by the handling unit 46, which moves the footwear last 22 relative to the stationary filament discharge nozzle 74, and/or scanned by the position detection unit 61, and/or the application path 28 is pre-programmed and/or the relative movement of the handling unit 46 and the footwear last relative to the textile output unit 64 is pre-programmed. Since the thermoplastic filament 18 is ejected in helical form, as described previously, the plurality of loops 26 is formed along the application path 28 as depicted in figure 7, which shows two parallel sections of the application path 28 and how they and the loops 26 overlap. Thus, the loops 26 are laid on top of each other, wherein at crossings 48 of the loops 26 are fused to each other, thereby creating a thermoplastic layer 94 on the footwear last 22.

With reference to figure 5, where as an example only two sections of the application path 28 are shown, the application path 28 circumvents the footwear last 22 in a multitude of sections, thereby forming the base footwear upper 16. Thus, the application path 28 forms a kind of helix around the footwear last 22.

The thermoplastic filament 18 is applied onto the footwear last 22 to form a uniform layer thickness of for example 0.5 mm or less. This saves material and weight.

In order to establish connection with the sole unit 80, the thermoplastic filament 18 is not only applied to the footwear last 22 but also to a side surface of the sole unit 80. The sole unit 80 is at least partly pre-heated, in particular at least in portions facing the textile footwear upper in the final product, to improve bonding of the thermoplastic filament 18 with the sole unit 80, in particular by the direct heat unit 105.

Returning to figure 4, step S60 is optional and may be omitted for some articles of footwear. Step S60 runs at least partly parallel to step S30 and comprises a modification step of modifying at least one application parameter related to the applying, in particular the spraying, of the thermoplastic filament 18, 30, 44, 76 onto the shaping carrier 20. Preferably, the modifying is for creating at least one specific property in at least one specific area. This is further depicted in figure 6 which shows a three-dimensional schematic of the partly finished base footwear upper 16 in the process of being formed on the footwear last 22.

The at least one application parameter may comprise at least one nozzle parameter of at least one filament discharge nozzle of the textile output unit 64, such as the filament discharge nozzle 74. Furthermore, the at least one application parameter may comprise at least one thermoplastic material parameter of the thermoplastic filament 18, 30, 44, 76. In addition, the at least one application parameter may comprise at least one filament discharge parameter related to the discharge of the thermoplastic filament 18, 30, 44, 76 from the textile output unit 64. According to a further option, the at least one application parameter may comprise at least one temperature parameter, wherein preferably the temperature parameter comprises a temperature of the shaping carrier 20, in particular of the footwear last 22, when applying the thermoplastic filament 18, 30, 44, 76 onto shaping carrier 20, in particular the footwear last 22.

The modifying is exemplarily visualized in figure 6, in which in a specific area 36, namely an outer side section 58, at least one application parameter related to the applying of the thermoplastic filament 18, 30, 44, 76 is modified. The modifying effects that the thermoplastic filament 18 that is applied to the shaping carrier 20 is modified from a first width W1 to a second width W2 and then a third width W3 on the shaping carrier 20. This is schematically visualized in figure 6 by the width of the thermoplastic filament 18, 30, 44, 76 on the application path 28. The course of the application path 28 in the embodiment of figure 6 is the same as the one in the embodiment of figure 5. However, the width of the thermoplastic filament 18, 30, 44, 76 along the application path 28 is modified in the specific area 36, namely in an outer side section 58. For simplification reasons, the loops 26 are not shown, but the modifying effects a modified width of the thermoplastic filament 18, 30, 44, 76, which will be explained in further detail. Of course, the modifying may have other effects than the modified width. Therefore, the modifying step S60 is only exemplarily explained by use of this possible effect. Of course, the modifying may have other effects than a modified width of the thermoplastic filament applied on the shaping carrier.

According to an exemplary option, the at least one application parameter that is modified comprises the at least one nozzle parameter, wherein the nozzle parameter comprises a distance between the filament discharge nozzle 74 and the shaping carrier 20. The modifying to a larger distance leads to a larger width of the thermoplastic filament 18, 30, 44, 76 on the application path 28, such as the second width W2 compared to the first width W1, and the modifying to a smaller distance leads to a smaller width, such as the third width W3 compared to the second width W2.

In addition to or alternatively, the at least one nozzle parameter comprises an opening degree of the at least one filament discharge nozzle 74. A larger opening degree leads to a larger width of the thermoplastic filament 18, 30, 44, 76 on the application path 28, such as the second width W2 compared to the first width W1, wherein a smaller opening degree leads to a smaller width, such as the first width W1 and the third width W3.

In addition to or alternatively, the at least one application parameter comprises at last one thermoplastic material parameter comprising a composition of the thermoplastic filament 18, 30, 44, 76. For example, the thermoplastic filament 18, 30, 44, 76 may be modified for the second width W2 in the specific area 36 by adding a rheological additive that increases fluidity, thereby achieving the larger width of the second width W2 of the thermoplastic filament 18, 30, 44, 76 on the application path 28 compared to the first width W1 and the third width W3. Accordingly, the rheological additive may be added only for the application path 28 for the section in which the second width W2 is desired. In general words, the rheological additive may be added for effecting a modified width of the thermoplastic filament 18, 30, 44, 76 on the application path 28.

Similarly, the thermoplastic filament 18, 30, 44, 76 may be modified by adding a rheological additive that reduces fluidity or increases viscosity, i.e., a thickener, thereby achieving the reduced width of the thermoplastic filament 18, 30, 44, 76 on the application path 28, such as the first width W1 and the third width W3 compared to the second width W2.

In addition to or alternatively, the at least one application parameter comprises at last one thermoplastic material parameter comprising a temperature of the thermoplastic material before discharging as the thermoplastic filament 18, 30, 44, 76 via the textile output unit 64, in particular the at least one filament discharge nozzle 74. For example, the temperature may be increased in the barrel 102 and/or selectively in the dosing head 106. Therefore, the dosing head 106 and/or the filament discharge nozzle 74 may comprise a respective heater (not shown) for heating the thermoplastic material. A higher temperature of the thermoplastic material leads to a higher temperature of the thermoplastic filament 18, 30, 44, 76, thereby leading a higher fluidity of the thermoplastic filament 18, 30, 44, 76, i.e., less viscosity, thereby leading to a the larger width of the thermoplastic filament 18, 30, 44, 76 on the application path 28, such as of the second width W2. Accordingly, the temperature of the thermoplastic material may be increased for the section of the application path 28 in which a larger width of the thermoplastic filament 18, 30, 44, 76 on the application path 28 such as the second width W2 is desired, wherein the temperature may be decreased for the section of the application path 28 in which a lower width of the thermoplastic filament 18, 30, 44, 76 on the application path 28, such as the first width W1 and/or the third width W3, is desired.

Likewise to the temperature of the thermoplastic material before discharging as the thermoplastic filament 18, 30, 44, 76, the at least one application parameter may comprise at least one filament discharge parameter comprising a filament discharge temperature of the thermoplastic filament 18, 30, 44, 76 when being discharged from the textile output unit 64 and/or when forming the plurality of path segments on the shaping carrier 20. The temperature may be modified as explained for the temperature of the thermoplastic material before discharging as the thermoplastic filament 18, 30, 44, 76.

In addition to or alternatively, the at least one application parameter comprises at least one filament discharge parameter related to the discharge of the thermoplastic filament 18, 30, 44, 76 from the textile output unit 64, wherein the at least one filament discharge parameter comprises a flow rate of the thermoplastic filament 18, 30, 44, 76 when being discharged from the textile output unit 64. For example, the flow rate may be modified for achieving a modified width of the thermoplastic filament 18, 30, 44, 76 on the application path 28. For example, for achieving a larger width, such as the second width W2 in the specific area 36, the flow rate may be increased, thereby achieving the higher speed and a higher mass per time of the thermoplastic filament 18, 30, 44, 76 when being applied to the shaping carrier 20, thereby leading to an increased width of the thermoplastic filament 18, 30, 44, 76 on the application path 28, such as the second width W2 compared to the first width W1 and the third width W3.

In addition to or alternatively, the at least one application parameter comprises at least one filament discharge parameter related to the discharge of the gas from the at least one gas discharge nozzle 57. The at least one filament discharge parameter may comprise a gas discharge temperature of the gas when being discharged from the at least one gas discharge nozzle 57. The gas is discharged on the thermoplastic filament 18, 30, 44, 76. Therefore, the temperature of the gas has an influence on the temperature of the thermoplastic filament 18, 30, 44, 76. Accordingly, the temperature of the thermoplastic filament 18, 30, 44, 76 may be increased for the section of the application path 28 in which an increased width of the thermoplastic filament 18, 30, 44, 76 when being applied to the shaping carrier 20 is desired, such as the second width W2, by increasing the temperature of the gas. Likewise, the temperature may be lowered for the section of the application path 28 in which a reduced width of the thermoplastic filament 18, 30, 44, 76 when being applied to the shaping carrier 20 is desired, such as the first width W1 and/or the third width W3, which may be achieved by a lower temperature of the gas.

In addition to or alternatively, the at least one filament discharge parameter may comprise a gas flow rate of the gas through the at least one gas discharge nozzle 57. For example, the gas flow rate may be modified, for example in the specific area 36, by increasing and/or reducing the gas flow rate, thereby achieving the higher or lower speed of the thermoplastic filament 18, 30, 44, 76 when being applied to the shaping carrier 20, thereby leading to an increased or reduced width of the thermoplastic filament 18, 30, 44, 76 when being applied to the shaping carrier 20 such as the second width W2 increased compared to the first width W1 and the third width W3, or such as the first width W1 and the third width W3 compared to the second width W2.

In addition to or alternatively, the at least one application parameter may comprise a temperature of the shaping carrier 20 when applying the thermoplastic filament 18, 30, 44, 76 onto the shaping carrier 20. The temperature of the shaping carrier 20 has an influence on the temperature of the thermoplastic filament 18, 30, 44, 76 when the thermoplastic filament 18, 30, 44, 76 contacts the shaping carrier 20. Accordingly, the temperature of the thermoplastic filament 18, 30, 44, 76 may be increased by increasing the temperature of the shaping carrier 20 for the section of the application path 28 in which an increased width is desired, such as the second width W2. Likewise, the temperature may be decreased for the section of the application path 28 in which a reduced width of the thermoplastic filament 18, 30, 44, 76 when being applied to the shaping carrier 20 is desired, such as the first width W1 and/or the third width W3 compared to the second width W2. This may be achieved by a lower temperature of the shaping carrier 20. The shaping carrier 20 may be heated via external heat such as radiation applied to the shaping carrier 20, and/or via heat generated inside or on the surface of the shaping carrier 20, such as by heating wires provided on the shaping carrier 20. The cooling may be implemented by heating other sections of the shaping carrier 20 more, and/or by cooling channels internal to the shaping carrier.

Although the outer side section 58 is mentioned as the specific area 36, the skilled person will understand that any section and/or any specific area of the base footwear upper 16 may be applicable as disclosed herein, depending on application and/or customer demands.

At the end of step S30 and possibly S60 the thermoplastic filament 18 may be fully applied onto the footwear last 22 so as to form the thermoplastic layer 94. The base footwear upper 16 is connected to the sole unit 80, thereby forming a precursor article of footwear. However, this precursor article of footwear may already be a full-fledged article of footwear and may possibly be sold, too.

Returning to figure 4, step S60 may be embodied as set out in the following in combination with or separately as set out in the foregoing. The modification step S60 of modifying may comprise modifying at least one color of the thermoplastic filament 18. Therefore, the method comprises the modification step S60 of modifying, in particular during the application step S30, at least one application parameter related to the applying, in particular the spraying, of the thermoplastic filament 18 onto the shaping carrier 20, wherein the at least one application parameter comprises at least one thermoplastic material parameter of the thermoplastic filament 18, wherein the thermoplastic material parameter comprises at least one color of the thermoplastic filament 18. The at least one color may be modified by introducing additives to the polymer composition, such as colorants, pigments, and/or dyes introduced into the thermoplastic material used for the thermoplastic filament 18. The additives may be introduced by means of the input dosing unit 53, the optional additive input 55, and/or the filament treatment unit 105, which may comprise an additive introducing unit.

In step S60, the color is modified from at least a first color to a second color, different to the first color. For a continuous transition from the first color to the second color, the relative concentration of two or more colorants, pigments, and/or dyes introduced via the input dosing unit 53, the additive input 55 and/or the filament treatment unit 105 is dynamically modified for example via controlled respective dosing systems. For an abrupt transition from the first color to the second color, the relative concentration of the colorants, pigments, and/or dyes introduced via the input dosing unit 53, the additive input 55 and/or the filament treatment unit 105 is abruptly modified.

By means of the filament treatment unit 105 comprising the additive introducing unit, the color of the thermoplastic filament 18 can be modified after discharge from the textile output unit 64, in particular after discharge of the filament discharge nozzle 74. The filament treatment unit 105 allows quick modification of the color, thereby allowing a high resolution with regard to the color and color changes of the textile element. The filament treatment unit 105 may be configured to produce an airstream carrying the additive for application on the thermoplastic filament 18. In addition or alternatively, the color can be modified prior to the discharge of the textile output unit 64 by means of the input dosing unit 53 and the additive input 55.

By means of an embodiment of the filament treatment unit 105, the color of the thermoplastic filament 18 can be modified by physically treating of the thermoplastic filament. Such physical treatment may include exposing the filament to localized heat, pressure, and/or electromagnetic radiation, such as laser beams, UV light, and/or infrared energy produced by the filament treatment unit 105, to induce a change in color through activation of in particular embedded color-changing agents, such as thermochromic and/or photochromic compounds.

The color of the thermoplastic filament 18 may be modified for at least a specific area, such as the specific area 32 or the 34, to achieve a specific property, such as a specific appearance. With regard to figure 16, which is based on figure 1, the color may be modified for the specific area 32, namely the heel section 66, to achieve a specific appearance in the heel section 66. For example, the specific appearance may comprise a brand sign. Likewise, the color for the specific area 32 may indicate a specific property of the textile element 10. In this example, the color for the specific area 32 is linked to a certain material composition of the material used as the thermoplastic filament 18 in the specific area 32, and the material composition leads to a higher rigidity, thereby allowing less wear in the specific area 32. The color then allows the user to notice that the specific area 32 has a higher rigidity.

Returning to figure 4, the modifying step S60 comprises an optional sub-step S65. Sub-step S65 is a position detection step of detecting a position on the shaping carrier 20 to which the thermoplastic filament 18 is or will be discharged. For detecting the position on the shaping carrier 20, the textile output unit 64 may comprise a position detection unit 61, preferably provided on or close to the filament discharge unit 103, as shown in figure 3. The position detection unit 61 may be configured to detect the position in the form of a specific area, to which the thermoplastic filament 18 is applied, and/or of a specific application point along the application path 28, to which the thermoplastic filament 18 is or will be applied, and/or a path segment of the application path, to which the thermoplastic filament 18 is or will be applied. Furthermore, the position detection unit 61 may be configured to detect the shaping carrier 20, a position on the shaping carrier 20, the application path 28, at least one path segment 24 of the application path 28, at least one reference marking and/or encoded pattern preferably provided on the shaping carrier 20,

Then, during the modification step S60, the at least one application parameter, in particular the at least one color of the thermoplastic filament 18, is modified based on the position on the shaping carrier 20. The position detection unit 61 may comprise a camera.

Returning to figure 4, step S40 is optional and may be omitted for some articles of footwear 78. Step S40 runs at least partly parallel to step S30 and comprises a detection step of detecting the thermoplastic filament 18, 30, 44, 76, in particular at least one filament parameter of the thermoplastic filament 18, 30, 44, 76, between the textile output unit 64 and the shaping carrier 20, in particular the footwear last 22. In the embodiment of figure 3, the detecting is performed by the detection unit 59 and may be performed by any additional or alternative detection unit suitable for detection of the thermoplastic filament 18, 30, 44, 76 between the textile output unit 64 and the shaping carrier 20.

In the detection step S40, at least one filament shape parameter of the thermoplastic filament 18, 30, 44, 76 is detected.

In the example embodiment, the at least one filament shape parameter comprises at least one helix shape parameter, at least one filament cross-section shape parameter and/or at least one filament trajectory parameter. Example helix shape parameters that are detected is helix diameter, helix pitch, winding angle, number of turns, and/or axial progression. The at least one filament cross-section shape parameter may comprise filament width, height (or thickness), diameter, cross-section shape, aspect ratio, and/or edge contour of the thermoplastic filament 18, 30, 44, 76, in particular between the textile output unit 64 and the shaping carrier 20. The filament trajectory parameter comprises a trajectory angle, a curvature, a velocity vector, a discharge height, and/or lateral displacement. The trajectory angle may be an angle of the thermoplastic filament 18, 30, 44, 76 along a spray trajectory between the textile output unit 64 and the shaping carrier 20 relative to a surface of the shaping carrier 20 and/or a normal direction on the surface of the shaping carrier 20, to which surface the thermoplastic filament 18, 30, 44, 76 is applied.

In addition or alternatively, in the detection step at least one filament material parameter of the thermoplastic filament 18, 30, 44, 76 is detected. The at least one filament material parameter of the thermoplastic filament 18, 30, 44, 76 comprises at least one filament color of the thermoplastic filament 18, 30, 44, 76, at least one filament material quantity of the thermoplastic filament 18, 30, 44, 76, at least one filament temperature of the thermoplastic filament 18, 30, 44, 76 and/or at least one filament electrostatic property of the thermoplastic filament 18, 30, 44, 76.

In addition or alternatively, in the detection step at least one filament flow parameter of the thermoplastic filament 18, 30, 44, 76 is detected. The at least one filament flow parameter of the thermoplastic filament 18, 30, 44, 76 comprises at least one filament continuity of the thermoplastic filament 18, 30, 44, 76. Accordingly, it may be detected when the thermoplastic filament 18, 30, 44, 76 is interrupted between the textile output unit 64 and the shaping carrier 20. Accordingly, defects in the thermoplastic filament 18, 30, 44, 76 may be detected.

Returning to figure 4, step S50 is optional and may be omitted for some articles of footwear 78. Step S50 runs at least partly parallel to step S30 and to step S40 and comprises an evaluation step of evaluating whether the thermoplastic filament 18, 30, 44, 76 as detected in the detection step meets at least one predetermined process requirement. The process requirement is at least one reference value, a threshold value, and/or a tolerance value. The evaluation step provides at least one result of the evaluation step. The at least one result comprises an indication whether the thermoplastic filament 18, 30, 44, 76 as detected in the detection step S40 meets the at least one predetermined process requirement.

In the present example embodiment, the filament material parameter comprises a filament discharge temperature of the thermoplastic filament 18, 30, 44, 76. Said temperature is detected by the detection unit 59 in step S40. Then, in step S50, a predetermined filament discharge temperature is considered. In step S50, it is evaluated whether the thermoplastic filament 18, 30, 44, 76 as detected in step S40 meets the predetermined filament discharge temperature. According to an option, the result of the evaluation step S50 may be that the filament discharge temperature meets the predetermined filament discharge temperature, or that the filament discharge temperature is within a tolerance value relative to the predetermined filament discharge temperature. Alternatively, the result of the evaluation step S50 may be that the filament discharge temperature does not meet the predetermined filament discharge temperature, or that the filament discharge temperature is not within a tolerance value relative to the predetermined filament discharge temperature, or how much the filament discharge temperature deviates from the predetermined filament discharge temperature. Of course, since the predetermined process requirement may comprise at least one predetermined application parameter and/or at least one filament parameter, any of the application parameters and/or any of the filament parameters as mentioned herein may be possibly detected in step S40 and/or evaluated in step S50.

Returning to figure 4, step S60 may be based on the evaluation step S50 and/or the detection step S40. Said differently, if the method comprises the detection step S50 and/or the evaluation step S50, then during the modification step S60 at least one application parameter can be modified based on the result of the evaluation step S50. In a preferred embodiment, this comprises that the at least one application parameter is modified to meet the predetermined process requirement. The at least one application parameter may be modified, in particular controlled, to meet the predetermined application parameter and/or the predetermined filament parameter.

According to an example embodiment, at least one application parameter may be modified based on a corresponding predetermined filament parameter, in particular a result of the evaluation step related to a corresponding predetermined filament parameter. For example, in step S40, the color of the thermoplastic filament 18 may be detected by means of the detection unit 59. Then, in case the result of the evaluation step S50 is that the color of the thermoplastic filament 18 does not meet the predetermined color of the thermoplastic filament 18, or that the color is not within a tolerance value relative to the predetermined color of the thermoplastic filament 18, or indicates how much the color of the thermoplastic filament 18 deviates from the predetermined color of the thermoplastic filament 18, then the application parameter, in particular the color of the thermoplastic filament 18, is modified based on said result. This can be done by modifying the color of the thermoplastic filament 18 to meet the predetermined color of the thermoplastic filament 18. As said, the color can be modified by means of the input dosing unit 53, the additive input 55 and/or the filament treatment unit 105.

According to another example embodiment, at least one application parameter may be modified based on a non-corresponding predetermined filament parameter. This may be done when the filament parameter cannot be directly modified, but needs modification of a another, but not directly corresponding application parameter. For example, in case the result of the evaluation step S50 is that the filament discharge temperature does not meet the predetermined filament discharge temperature, or that the filament discharge temperature is not within a tolerance value relative to the predetermined filament discharge temperature, or how much the filament discharge temperature deviates from the predetermined filament discharge temperature, then a non-corresponding application parameter may be modified based on said result. In order to achieve the predetermined filament discharge temperature, the temperature of the thermoplastic material before discharging as the thermoplastic filament 18 may be modified, and/or the filament flow rate may be modified to increase or reduce the heating duration of the thermoplastic material inside the textile output unit 64, and/or the temperature of the gas applied by the filament treatment unit 105 may be modified. Furthermore, the filament discharge temperature may be modified by increasing or reducing the temperature inside the barrel 102, and/or by increasing the temperature of the filament discharge nozzle 74. Of course, further means may be taken to meet the predetermined application parameter.

Returning again to figure 4, optional step S70 comprises diversifying the textile footwear upper 12, 112 for different applications and/or wearers by applying a second thermoplastic filament 30 and possibly a third thermoplastic filament 44 onto the base footwear upper 16 in a specific area.

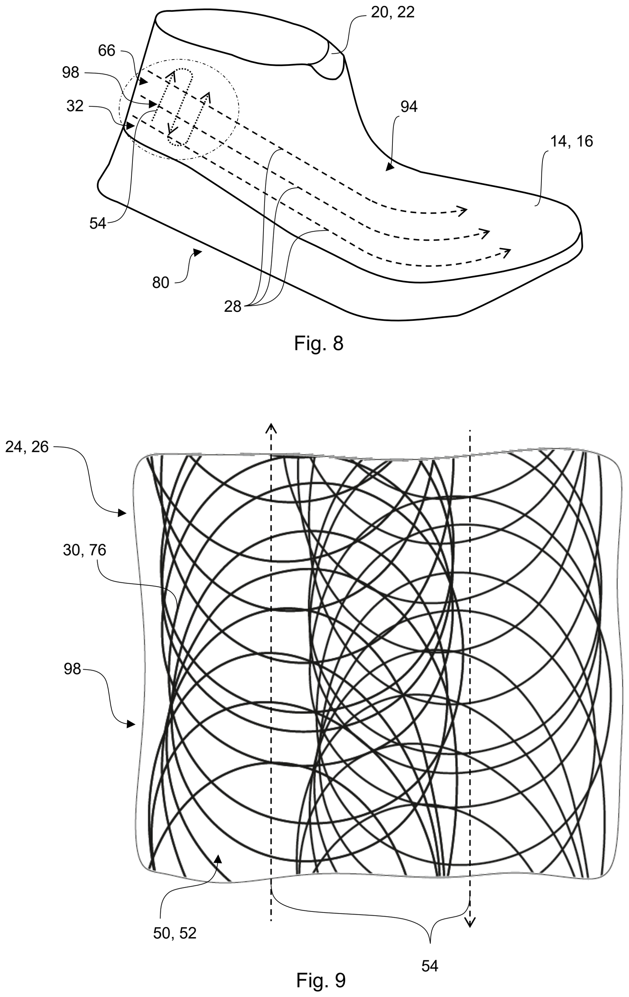

Figure 8 depicts a three-dimensional schematic of step S70 for creating a textile footwear upper 12 for the article of footwear 78 of figure 1, but with a second thermoplastic filament 30. Despite the detection step S40, the evaluation step S50 and the modification step S60 is explained in the context of the applying step S30 and the thermoplastic filament 18, it is to be understood that the method may comprise respective steps S40, S50 and S60 for detecting, evaluating and modifying in the context of the second thermoplastic filament 30, the third thermoplastic filament 44 and/or any further thermoplastic filament.

In optional step S70 the second thermoplastic filament 30 is applied as a plurality of second path segments 50, namely as a plurality of second loops 52, along a second application path 54 in the specific area 32, which is also shown in the enlarged view of figure 9. The resulting structure is quite similar to the one shown in figure 7 for the thermoplastic filament 18. Here, the specific area 32 is the heel section 66, however any other section of the textile footwear upper 12 would also be applicable, in particular depending on demands.

The second thermoplastic filament 30 is applied as to form a second thermoplastic layer 98 above the thermoplastic layer 94, wherein the second thermoplastic layer 98 is fixed to the thermoplastic layer 94 in the specific area 32. The thermoplastic layer 94 and the second thermoplastic layer 98 are fused to each other. In order to improve the connection between the thermoplastic layer 94 and the second thermoplastic layer 98, the footwear last 22 may be heated before or during application of the second thermoplastic filament 30, for example via a heating element embedded in the footwear last 22 and/or by the filament treatment unit 105.

The second thermoplastic filament 30 is applied in the specific area 32 in the form of meanders. The second thermoplastic filament 30 comprises straight sections that are connected to each other at their ends so as to form a continuous entity. In the specific area 32 the straight sections of the second application path 54 are angled with respect to underlying sections of the application path 28. Specifically, the straight sections of the thermoplastic filament 30 are essentially perpendicular to the underlying sections of the thermoplastic filament 18, however any other angle is also conceivable. Alternatively, the second thermoplastic filament 30 could also be applied in the specific area 32 in the form of a spiral or any other applicable shape.

The thermoplastic filament 18 and the second thermoplastic filament 30 are can be made from the same material and are parts of a common continuous thermoplastic filament 76. That is, after creating the base footwear upper 16 in step S30 and possibly S40, S50 and S60 by depositing the thermoplastic filament 18, which is part of the continuous thermoplastic filament 76, the process may directly continue with step S70 and applying the second thermoplastic filament 30, which is also part of the continuous thermoplastic filament 76, in the specific area 32.

The second thermoplastic filament 30 is applied in the specific area 32 to form a layer thickness of preferably between 0.5 mm and 2 mm, thereby strengthening, stiffening and plating the specific area 32, in this case the heel section 66. Furthermore, a distinct aesthetic effect may be achieved, in particular by a specific course of the second application path 54.

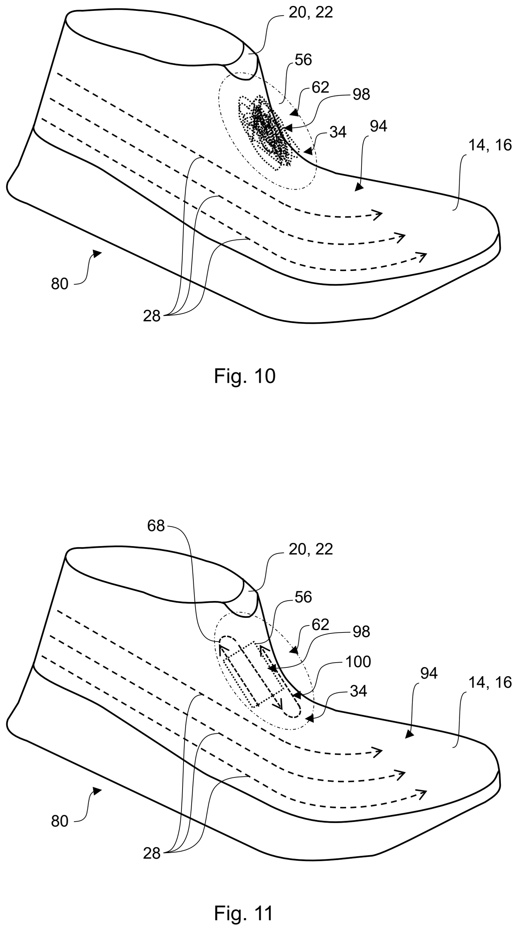

Figures 10 and 11 depict three-dimensional schematics of step S70 for creating the textile footwear upper 112 for the article of footwear 178 of figure 2.

In step S70 the second thermoplastic filament 30 is applied as a wadding 56 in a specific area 34 (cf. figure 10) by increasing the distance between the footwear last 22 and the filament discharge nozzle 74 during deposition. Here, the specific area 34 is the instep section 62, however any other section of the textile footwear upper 112 would also be applicable, in particular depending on demands.

Furthermore, the third thermoplastic filament 44 is optionally applied as a plurality of third path segments, namely as a plurality of third loops, along a third application path 68 onto the thermoplastic filament 18 and the second thermoplastic filament 30 in the specific area 34. This is shown in figure 11. For the sake of clarity, the wadding 56 is herein schematically depicted as a rectangle.

The third thermoplastic filament 44 is applied in the specific area 34 in the form of meanders. Alternatively, the third thermoplastic filament 44 could also be applied in the specific area 34 in the form of a spiral or any other applicable shape.

The second thermoplastic filament 30 is applied as to form a second thermoplastic layer 98 above the thermoplastic layer 94, wherein the second thermoplastic layer 98 is fixed to the thermoplastic layer 94 in the specific area 34. The third thermoplastic filament 44 is applied as to form a third thermoplastic layer 100 above the second thermoplastic layer 98, wherein the third thermoplastic layer 100 is fixed to the thermoplastic layer 94 and the second thermoplastic layer 98 in the specific area 34. Thus, the thermoplastic layer 94 and the third thermoplastic layer 100 provide a pocket for the second thermoplastic layer 98 in order to protect the wadding 56.

The thermoplastic layer 94, the second thermoplastic layer 98 and the third thermoplastic layer 100 are fused to each other. In order to improve the connection between them, the footwear last 22 is heated before or during application of the second thermoplastic filament 30 and the third thermoplastic filament 44, for example via a heating element embedded in the footwear last 22 and/or by the filament treatment unit 105, which may be a direct heat unit.

The thermoplastic filament 18 and the second thermoplastic filament 30 can be made from different materials. The thermoplastic filament 18 and the third thermoplastic filament 44 can be made from the same or different material. In an example, while applying the filaments, 18, 30, 68, the polymer composition is changed for applying the second thermoplastic filament 30.

The second thermoplastic filament 30 is applied in the specific area 34 with a layer thickness preferably between 0.5 mm and 2 mm, thereby cushioning and thermally insulating the specific area 34, in this case the instep section 62. Furthermore, a distinct aesthetic effect may be achieved, in particular by a specific course of the third application path 68.

Figure 12 generally shows example specific areas 32, 34, 36, 38, 40 of the base footwear upper 16 which could be targets for the application of specific properties in a three-dimensional schematic view.

The specific areas 32, 34, 36, 38, 40 may comprise the outer side section 58, the instep section 62, the heel section 66, a toe section 70, and/or an ankle section 72. Additionally, any other applicable area of the base footwear upper 16 may be envisaged as specific area, in particular depending on demands.

The specific properties may comprise one or any combination of strengthening, stiffening, protective plating, cushioning, thermal insulation, higher flexibility, higher breathability, entrance enhancement, and/or aesthetic effect.

The specific properties may be achieved, as outlined above, by modifying at least one application parameter related to the applying, in particular the spraying, of the thermoplastic filament 18, 30, 44, 76 onto the shaping carrier 20. Alternatively, or additionally, the specific properties may be achieved, as explained above, by applying the second thermoplastic filament 30 and possibly the third thermoplastic filament 44 onto the thermoplastic filament 18 and/or possibly the second thermoplastic filament 30 in the specific area 32, 34, 36, 38, 40.

Another embodiment is shown in Figure 13. This figure depicts the article of footwear 278 mentioned before, which comprises a textile element 210 forming a textile footwear upper 212, in a schematical three-dimensional view. The article of footwear 278 was manufactured using the same base footwear upper 16 and the same sole 80 unit also used in the previous embodiments. However, the article of footwear 278 has a different diversification structure 242.

When manufacturing the article of footwear 278, in step S70 the second thermoplastic filament 30 is applied as a wadding 156 in the specific area 38, namely in the toe section 70 of the textile footwear upper 212. However, unlike the embodiment of Figures 2, 10 and 11, the wadding 156 is left uncovered, giving a distinctive appearance.

Returning to figure 4, step S80 comprises finalizing the article of footwear 78, 178, 278. In step S80 the article of footwear 78, 178, 278 may be dried and/or cured to fuse the thermoplastic filaments 18, 30, 44, for example by air blowing or in a controlled atmosphere. A print may be applied to the article of footwear 78, 178, 278, in particular to the textile footwear upper 12, 112, 212 and/or the sole unit 80. The article of footwear 78, 178, 278 may be plasma treated prior to applying the print. Furthermore, the article of footwear 78, 178, 278 may be dried and/or cured after printing. Finally, the article of footwear 78, 178, 278 may be removed from the footwear last 22 and packaged. All these processing steps in step S80 may be conducted by respective manufacturing units of the manufacturing system 82 (not shown). These manufacturing units may be furnished with the footwear last 22 and any article fixed thereon by the handling unit 46.

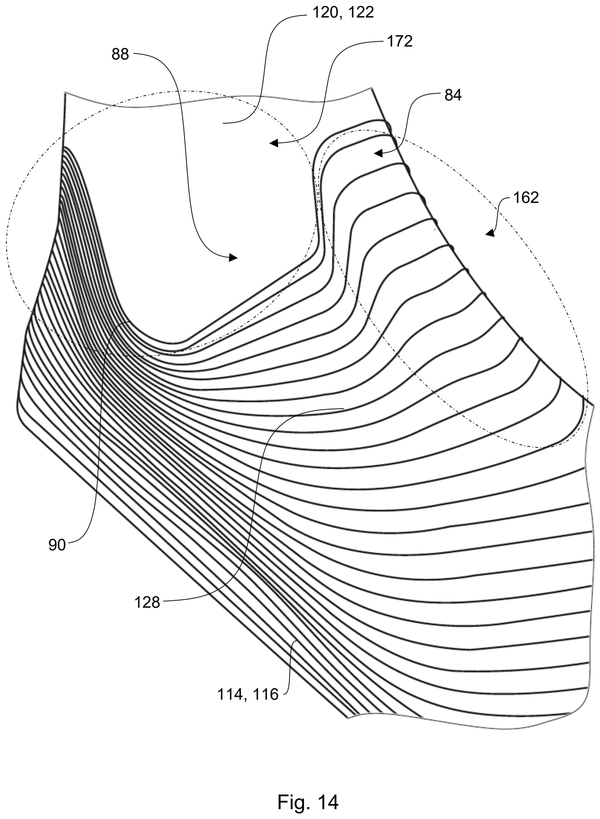

Figure 14 shows an alternative base element 114 forming a base footwear upper 116 in a schematic three-dimensional view. The base footwear upper 116 may be used as a common base for a different line of articles of footwear. The base footwear upper 116 has been formed with an alternative shaping carrier 120, i.e., an alternative footwear last 122, and in alternative steps S10 to S80, in particular in alternative steps S30, S60 and potentially S70, of the method described above. Herein, a specific course of an application path 128 is chosen while applying the thermoplastic filament 18, which is distinctly different from the application path 28 for forming the base footwear upper 16 of the previous embodiments.

The course of the application path 128 was chosen in an ankle section 172 and instep section 162 to shape a collar 88 of the base footwear upper 116 such as to facilitate entry of a wearer's foot and still hold the foot in place when wearing. In particular, a flap 84 is shaped in the instep section 162 while applying the thermoplastic filament 18 onto the footwear last 122. Furthermore, a collar line 90 of the collar 88 is lowered in the ankle section 172 while applying the thermoplastic filament 18 onto the footwear last 122.

In step S60, at least one application parameter related to the applying of the thermoplastic filament 18 onto the shaping carrier 120 is modified, preferably in specific areas such as the collar line 90, to increase or decrease deposition volume, the width of the thermoplastic filament 18 when applied to the shaping carrier 120, or density of the thermoplastic filament 18 for achieving specific properties, like increased cushioning, flexibility and/or breathability. For example, for the collar line 90, the at least one application parameter may comprise at least one nozzle parameter. The at least one nozzle parameter may comprise an opening degree of the at least one filament discharge nozzle 74. The opening degree may be modified to a smaller opening degree. Thereby, a reduced width of the thermoplastic filament 18 when applied to the shaping carrier 120 can be achieved, which helps to apply the thermoplastic filament 128 along the closely neighboring application path segments in the specific area of the collar 90. Similar effects may be achieved when the at least one nozzle parameter comprises a distance between the at least one filament discharge nozzle 74 with respect to a normal surface of the shaping carrier 120, and when distance is modified to a smaller distance, thereby achieving a higher application, in particular spraying, accuracy and a smaller width of the thermoplastic filament 128 when applied to the shaping carrier 120.

Likewise, fine application and/or a small width of the thermoplastic filament 18 when applied to the shaping carrier 120 may be achieved, for example for the specific area of the collar 90, if the application parameter comprises the at least one thermoplastic material parameter comprising a composition of the thermoplastic filament 18 and/or a temperature of the thermoplastic filament 18 before discharging as the thermoplastic filament 18 via the textile output unit 64. The composition may be modified to achieve an increased viscosity. The temperature may be modified to achieve a reduced temperature of the thermoplastic filament.

Similarly, fine application and/or a small width of the thermoplastic filament 18 when applied to the shaping carrier 120 may be achieved if the at least one application parameter comprises the at least one filament discharge parameter comprising a filament discharge temperature of the thermoplastic filament 18 when being discharged from the textile output unit 64 and/or when forming the plurality of path segments 24 on the shaping carrier 120. The filament discharge temperature may be modified to a reduced temperature, thereby achieving less viscosity and thus a finer application of the thermoplastic filament 18.

Similarly, fine application and/or a small width of the thermoplastic filament 18 when applied to the shaping carrier 120 may be achieved if the at least one application parameter comprises the at least one gas discharge parameter comprising a gas discharge temperature of the gas when being discharged from the gas discharge nozzle 57. The gas discharge temperature may be modified to a reduced temperature, thereby achieving cooling, less heating or no heating of the thermoplastic filament 18 to which the gas is applied, thereby achieving less viscosity and thus a finer application of the thermoplastic filament 18. Likewise, the at least one application parameter may comprise the at least one gas discharge parameter comprising a gas flow rate of the gas through the at least one gas discharge nozzle 57. The gas flow rate may be modified to an increased flow rate, thereby achieving increased cooling of the thermoplastic filament 18 to which the gas is applied, thereby achieving less viscosity and thus a finer application of the thermoplastic filament 18. In case the gas discharge temperature is high enough to heat the thermoplastic filament 18, the gas flow rate may be modified to a reduced flow rate, thereby achieving less or no heating of the thermoplastic filament 18 to which the gas is applied, thereby achieving less viscosity and this a finer application of the thermoplastic filament 18.

To achieve a specific property such as a cushioning, for example in the specific area of the collar 90, the at least one application parameter may comprise the at least one filament discharge parameter comprising a filament flow rate of the thermoplastic filament 18 when being discharged from the textile output unit 64. The filament flow rate may be modified to achieve an increased filament flow rate to achieve increased deposition and/or application of thermoplastic filament 18 in the specific area of the collar 90. Likewise, the at least one application parameter may comprise the at least one thermoplastic material parameter comprising a composition of the thermoplastic filament 18. The composition may be modified to a composition with softer material characteristic to achieve the cushioning.

For the specific area of the flap 84, the application parameter may be modified differently, in particular in an opposite way, compared to the specific area of the collar 90. Thereby, a larger width of the thermoplastic filament 18 when applied to the shaping carrier 120 can be achieved. Thereby, the larger distance between neighboring application path sections of the application path 128 can be taken into account, meaning that despite the larger distance, the width of the thermoplastic filament 18 may be large enough to generate a continuous layer of filament to form the base footwear upper 116 or even the textile footwear upper 112, at least in the specific area of the flap 84. To increase the width, at least one of the following measures may be taken:
- The opening degree of the at least one filament discharge nozzle 74 may be modified to an increased opening degree.
- The distance between the at least one filament discharge nozzle 74 and the shaping carrier 120 may be modified to a larger distance.
- The orientation of the at least one filament discharge nozzle 74 with respect to a normal surface of the shaping carrier 120 may be modified to achieve application of the thermoplastic filament 18 with a smaller angle relative to the normal surface, thereby achieving an increased width,
- The composition of the thermoplastic filament 18 may be modified to a composition with less viscosity and/or increased fluidity.
- The temperature of the thermoplastic material before discharging as the thermoplastic filament 18 via the textile output unit 64 may be modified to an increased temperature, thereby achieving less viscosity and/or increased fluidity.
- The filament flow rate of the thermoplastic filament 18 when being discharged from the textile output unit 64 may be modified to a higher filament flow rate, thereby achieving more filament application along the application path 128.
- The filament discharge temperature of the thermoplastic filament 18 when being discharged from the textile output unit 64 and/or when forming the plurality of path segments 24 on the shaping carrier 120 may be modified to an increased temperature, thereby achieving less viscosity and/or increased fluidity.
- The gas discharge temperature of the gas when being discharged from the at least one gas discharge nozzle 74 may be modified to an increased temperature, thereby achieving less viscosity and/or increased fluidity.
- The gas flow rate of the gas through the at least one gas discharge nozzle 74 may be modified to an increased gas flow rate, thereby possibly achieving a higher velocity of the thermoplastic filament 18 upon application on the shaping carrier 120, thereby achieving higher spreading of the thermoplastic filament 18 on the shaping carrier 120.

Figure 15 shows the article of footwear 378 mentioned before, which comprises a textile element 310 forming a textile footwear upper 312, in a schematic three-dimensional view. The textile footwear upper 312 is based on yet another base element 214 which forms a base footwear upper 216. The base footwear upper 216 may be used as a common base for a different line of articles of footwear. The textile footwear upper 312 has been formed with an alternative shaping carrier (not shown), and in alternative steps S30 and S50 of the method mentioned above.

Here, the thermoplastic filament 18 has been applied as to form a thermoplastic layer 92, and the second thermoplastic filament 30 has been applied as to form a second thermoplastic layer 96 above the thermoplastic layer 92. Parts of the thermoplastic layer 92 and the base footwear upper 216 below the second thermoplastic layer 96 are marked by dashed lines in figure 15.

Herein, the thermoplastic filament 18 and the base footwear upper 216 only enclose a forefoot section of a foot accommodation space of the textile footwear upper 312, in particular in the manner of a slipper. The second thermoplastic filament 30, on the other hand, completely encloses the foot accommodation space.

Irrespective of the exact location of the thermoplastic filament 18 and the second thermoplastic filament 30 on the shaping carrier (not shown), at least one of the thermoplastic filament 18 and the second thermoplastic filament 30 was applied with an alternative modification step S60. According to the embodiment of figure 15, and returning to figure 4, the at least one application parameter that is modified comprises at least one filament electrostatic property. Therefore, the filament treatment unit 105 comprises a filament electrostatic property unit configured to apply electrostatic treatment to the filament, such as the thermoplastic filament 18 and/or the second thermoplastic filament 30. Due to simplification reasons, it will only be referred to the thermoplastic filament 18 in the following. By means of the filament electrostatic property unit, the thermoplastic filament may be imparted with a net electrostatic property, negative or positive, for example by means of corona discharge, triboelectric charging, and/or the inclusion of charge-modifying additives to the thermoplastic filament 18, such as quaternary ammonium salts, conductive carbon blacks, and/or metal oxides like zinc oxide. Preferably, the shaping carrier (not shown) is also chargeable. In one embodiment, the thermoplastic filament 18 is negatively charged by means of the filament electrostatic property unit and then electrostatically attracted to a positively biased shaping carrier (not shown). Accordingly, the electrostatic property of at least the thermoplastic filament 18 is modified in step S60, and thereby improving adhesion and minimizing deflection or sag during applying the thermoplastic filament 18, such as in step S30. Such modifying of the filament electrostatic property may be especially advantageous for fine-feature deposition of the thermoplastic filament 18, high-speed filament laying, and/or non-horizontal shaping carriers, where gravitational and inertial effects might otherwise compromise filament placement fidelity.

In an embodiment, the filament electrostatic property is only modified for a specific area, such as the specific area 132 at the ankle section 172, as for example in case the shaping carrier (not shown) is not tiled or tiltable during the applying of the thermoplastic filament 18, to improve applying of the thermoplastic filament 18 despite gravitational effects acting on the thermoplastic filament 18 in the specific area 132.

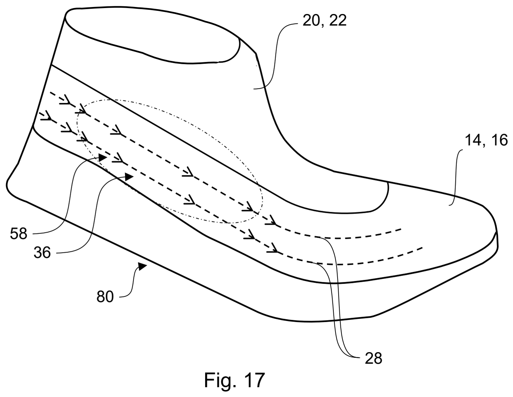

As another example for the modifying step S60, figure 17 shows modifying the movement of the at least one filament discharge nozzle 74 relative to the shaping carrier 20, wherein the movement comprises an application speed. Figure 17 shows a three-dimensional schematic of the partly finished base footwear upper 16 in the process of applying the thermoplastic filament 18 on the footwear last 22 and modifying said application speed. According to said example, the at least one application parameter may be an application speed of applying the thermoplastic filament 18 onto the footwear last 22 along the application path 28. This is visualized in figure 17 by the length of the arrows along the application path 28, wherein a longer distance between the arrowheads indicates a higher application speed. The course of the application path 28 in the embodiment of figure 17 is the same as the one in the embodiment of figure 5. However, the application speed is increased in the specific area 36, namely in the outer side section 58. With reference to figure 7 this leads to a higher average loop distance 60 between neighboring loops 26 in the specific area 36. In doing so, a higher flexibility and breathability may deliberately be achieved in the specific area 36 of the article of footwear 78, 178.

Although the outer side section 58 is mentioned as the specific area 36, the skilled person will understand that any section of the base footwear upper 16 may be applicable for increasing flexibility and/or breathability as disclosed herein, depending on application and/or customer demands.

It should be noted that in variants of the method disclosed herein, one or more of the steps of the method according to figure 4 may be omitted. As already outlined, step S40 may be optional, step S50 may be optional, step S60 may be optional, and step S70 may be optional. Furthermore, only one or plural of the steps S40, S50, S60 and S70 may be implemented in the method. Furthermore, step S80 could be skipped, so that the article obtained in steps S10, S20 and S30 and optionally steps S40 to S70 could be sold as an article of footwear.

Furthermore, the method disclosed herein could also be envisaged with different sole units for different articles of footwear. Herein, the employed sole units may have similar or the same outer dimensions and may fit on the same footwear last.

In further variants of the method of figure 4 a sole unit may not be provided in advance and may not be fastened to a footwear last. Instead, a textile footwear upper may be first created and a sole unit may be directly injected to an underside of the textile footwear upper.

Various modifications to the embodiments described are possible and will occur to those skilled in the art without departing from the invention, which is defined by the following claims.

## Claims

1. A method for manufacturing a textile element (10, 110, 210, 310, 410), in particular a textile footwear upper (12, 112, 212, 312, 412), the method comprising:
- an application step of applying, in particular spraying, a thermoplastic filament (18) onto a shaping carrier (20, 120), in particular a footwear last (22, 122), to form a plurality of path segments (24), in particular loops (26), on the shaping carrier (20, 120) along an application path (28, 128), thereby at least partially forming the textile element (10, 110, 210, 310, 410),
wherein during the application step the thermoplastic filament (18) is discharged from a textile output unit (64) and directed toward the shaping carrier (20, 120); and
- a detection step of detecting the thermoplastic filament (18), in particular at least one filament parameter of the thermoplastic filament (18), between the textile output unit (64) and the shaping carrier (20, 120).

2. The method according to claim 1,
wherein in the detection step at least one filament shape parameter of the thermoplastic filament (18) is detected.

3. The method according to claim 2,
wherein the at least one filament shape parameter comprises at least one filament helix shape parameter.

4. The method according to claim 2 or 3,
wherein the at least one filament shape parameter comprises at least one filament cross-section shape parameter.

5. The method according to any one of the preceding claims,
wherein in the detection step at least one filament material parameter of the thermoplastic filament (18) is detected.

6. The method according to claim 5,
wherein the at least one filament material parameter comprises at least one filament color of the thermoplastic filament (18).

7. The method according to claim 5 or 6,
wherein the at least one filament material parameter comprises at least one filament temperature.

8. The method according to any one of the preceding claims,
wherein in the detection step at least one filament flow parameter is detected.

9. The method according to claim 8,
wherein the at least one filament flow parameter comprises at least one filament continuity.

10. The method according to any one of the preceding claims,
wherein in the detection step the thermoplastic filament (18) is optically detected.

11. The method according to any one of the preceding claims, further comprising:
- an evaluation step of evaluating whether the thermoplastic filament (18) as detected in the detection step meets at least one predetermined process requirement.

12. The method according to claim 11, further comprising:
- a modification step of modifying, in particular during the application step, at least one application parameter related to the applying, in particular the spraying, of the thermoplastic filament (18) onto the shaping carrier (20, 120),
wherein during the modification step the at least one application parameter is modified based on the result of the evaluation step.

13. The method according to any one of the preceding claims,
wherein:
- the at least one application parameter comprises at least one nozzle parameter of at least one filament discharge nozzle (74) of the textile output unit (64); and/or
- the at least one application parameter comprises at least one thermoplastic material parameter of a thermoplastic material used for the thermoplastic filament (18); and/or
- the at least one application parameter comprises at least one filament discharge parameter related to the discharge of the thermoplastic filament (18) from the textile output unit (64); and/or
- in the application step a gas is discharged from at least one gas discharge nozzle (57) of the textile output unit (64) influencing the thermoplastic filament (18), and wherein the at least one application parameter comprises at least one gas discharge parameter related to the discharge of the gas from the at least one gas discharge nozzle (57).

14. An article of footwear (78, 178, 278, 378), in particular a sports and/or leisure shoe, comprising:
- a textile element (10, 110, 210, 310, 410) manufactured according to any one of the preceding claims which forms a textile footwear upper (12, 112, 212, 312, 412); and
- a sole unit (80) which is connected to the textile footwear upper (12, 112, 212, 312, 412).

15. A manufacturing system (82) for manufacturing a textile element (10, 110, 210, 310, 410), in particular a textile footwear upper (12, 112, 212, 312, 412), the manufacturing system (82) being configured to execute a method according to any one of the claims 1 to 13.
